# EUROPÄISCHE PATENTSCHRIFT

(11) **EP 0 537 578 B1**
(45) Veröffentlichungstag und Bekanntmachung des Hinweises auf die Patenterteilung: **31.07.1996**
(21) Anmeldenummer: 92116941.3
(22) Anmeldetag: 05.10.1992
(51) Int. Cl.: C08G 18/08, C08G 18/80, D06M 15/564, C08G 18/28, D06M 15/277

(54) **In Wasser dispergierbare blockierte Polyisocyanate, Verfahren zu ihrer Herstellung und ihre Verwendung**
Blocked polyisocyanate dispersable in water, process for its preparation and its use
Polyisocyanate bloqué dispersable dans l'eau, procédé pour sa préparation et son utilisation

(30) Priorität: 17.10.1991 DE 4134284
(43) Veröffentlichungstag der Anmeldung: 21.04.1993
(73) Patentinhaber: BAYER AG, 51368 Leverkusen (DE)
(72) Erfinder: Reiff, Helmut, Dr., W-5090 Leverkusen 1 (DE); Passon, Karl-Heinz, Dr., W-5090 Leverkusen 1 (DE); Ehlert, Hans-Albert, W-5090 Leverkusen 1 (DE); Nussbaum, Peter, W-5090 Leverkusen 1 (DE)

(56) Entgegenhaltungen:
- EP-A- 0 012 348
- EP-A- 0 075 775
- EP-A- 0 121 078
- EP-A- 0 207 414
- FR-A- 2 364 934
- FR-A- 2 481 293

## Beschreibung

Die Erfindung betrifft in Wasser dispergierbare blokkierte Polyisocyanate, die ionische Gruppen und Polyethergruppen enthalten, ein Verfahren zu ihrer Herstellung mit einem abschließenden Blockierungsschritt und die Verwendung dieser blockierten Polyisocyanate zur Herstellung von Textilhilfsmitteln, z.B. für die Hydrophob- und Oleophobausrüstung oder für die Textilhochveredelung.

Blockierte Polyisocyanate mit eingebauten Polyalkylenoxideinheiten und/oder ionischen Gruppen sind aufgrund ihrer Hydrophilie in Wasser dispergierbar und können deshalb aus wäßriger Phase verarbeitet werden. Sie sind wärmehärtbar, da bei Erreichen der Rückspalttemperatur unter Abgabe des Blockierungsmittels freie Isocyanatgruppen entstehen, die mit Isocyanat-reaktiven Verbindungen (also Verbindungen, die aktive Wasserstoffatome enthalten) zu reagieren vermögen. Diese in Wasser dispergierbaren blockierten Polyisocyanate eignen sich nicht nur als Lackbindemittelkomponenten für die Beschichtung von Metallen, Holz, Papier und Oberflächen von Kunststoffartikeln, sondern auch als Komponenten wäßriger Mittel zur Textilausrüstung. Für diesen Zweck bevorzugte blockierte Polyisocyanate enthalten sowohl eingebaute Polyalkylenoxideinheiten als auch ionische Gruppen. Geeignete Ausgangskomponenten zur Einführung dieser hydrophilen Gruppen umfassen einerseits Polyetherdiole und andererseits Verbindungen, die (1) gegenüber Isocyanatgruppen reaktionsfähige Gruppen und (2) ionische Gruppen oder in ionische Gruppen überführbare Gruppen enthalten. Beispiele für Ausgangskomponenten zur Einführung solcher (potentiell) ionischen Gruppen sind Sulfonatdiole, Dihydroxicarbonsäuren und Diaminocarbonsäuren.

Die in Wasser dispergierbaren blockierten Polyisocyanate werden bislang so hergestellt, daß zwar die als hydrophile Komponente geeigneten Polyetherdiole vor, während oder nach der Blockierungsaktion eingebaut werden, aber die Umsetzung mit den Verbindungen, welche die ionischen Gruppen liefern sollen, - mit Ausnahme der eine Doppelfunktion einnehmenden Alkalisulfite, die blockierend wirken und ionische Gruppen einführen - mit den teilblockierten Polyisocyanaten erfolgt (DE-OS 24 56 469 und 28 53 937). Die Alkalibisulfite nehmen als anorganische Blockierungsmittel eine Sonderstellung ein: Obwohl sie ionische Gruppen einführen, hat man sie in der Vergangenheit offenbar ausschließlich unter dem Aspekt der Verwendung als Isocyanat-Blockierungsmittel betrachtet, weil die durch Alkalibisulfite in das Polyisocyanat eingeführten ionischen Gruppen bei der Reaktion der Bisulfit-blockierten Isocyanatgruppen mit Isocyanat-reaktiven Verbindungen nicht Bestandteil der Polyisocyanat-Additionsprodukte werden.

Die FR-A 2 481 293 betrifft Polyurethanemulsionen, die blockierte Polyisocyanate als disperse Phase und externe Emulgatoren enthalten, wobei diese externen Emulgatoren ihrerseits Bisulfit-blockierte Isocanate sind. Beim Erhitzen nach der Applikation verlieren die Bisulfit-blockierten Isocyanate ihre hydrophile Blockierungsgruppe und dadurch ihre Tensidwirkung; durch den Verlust der hydrophilen Gruppe wird das Produkt stabiler gegen Angriff von Wasser. Wie sich aus den Beispielen ergibt, ist offensichtlich Dioxan notwendig, um eine stabile wäßrige Dispersion zu erhalten. Die Polyurethandispersionen der FR-A 2 481 293 können für verschiedenste Zwecke u.a. auch als Knitterfestmittel für Textilien, eingesetzt werden.

Überraschenderweise wurde nun gefunden, daß man technisch überlegene Produkte erhält, wenn man bei der Herstellung blockierter Polyisocyanate mit eingebauten Polyalkylenoxideinheiten und ionischen Gruppen entweder zunächst ohne Verwendung von Blockierungsmitteln ein Polyalkylenoxideinheiten und ionische Gruppen enthaltendes Polyisocyanat herstellt und erst anschließend die noch freien Isocyanatgruppen dieses Zwischenprodukts blockiert oder als Blockierungsmittel Alkalibisulfit verwendet.

Gegenstand der Erfindung sind also blockierte Polyisocyanate mit einem mittleren Molekulargewicht von 800 bis 25.000, vorzugsweise 1.000 bis 5.000, und einem Gehalt an
- blockierten Isocyanatgruppen, berechnet als freies NCO und bezogen auf unblockiertes Polyisocyanat (das heißt erfindungsgemäßes Polyisocyanat vor der Blockierung) entsprechend einem NCO-Gehalt von 5 bis 20, vorzugsweise 10 bis 20 Gew.-%,
- ionischen Gruppen von 1 bis 75, vorzugsweise 2 bis 25 Milliäquivalenten (meq) pro 100 g blockiertem Polyisocyanat und
- Polyalkylenoxideinheiten von 3 bis 40 Gew.-%, bezogen auf blockiertes Polyisocyanat,
   erhältlich durch Umsetzung
   a) organischer Polyisocyanate,
   b) NCO-reaktiver Verbindungen enthaltend (potentielle) ionische Gruppen,
   c) Polyalkylenether,
   d) NCO-Blockierungsmittel und gegebenenfalls
   e) weiterer, von b) c) und d) verschiedener NCO-reaktiver Verbindungen,
   wobei entweder zunächst aus den Komponenten a), b), c) und gegebenenfalls e) ein eingebaute Polyalkylenoxideinheiten und ionische Gruppen enthaltendes Polyisocyanat hergestellt wird, dessen freie NCO-Gruppen anschließend blockiert werden, oder als Blockierungsmittel (im Sinne einer Verbindung, die die Merkmale der obigen Gruppen b) und d) in sich vereinigt) Alkalibisulfit verwendet wird.

Weiterer Gegenstand der Erfindung ist ein Verfahren zur Herstellung dieser blockierten Polyisocyanate.

Als organische Polyisocyanate a) kommen aliphatishe, cycloaliphatische, araliphatische, aromatische oder heterocyclische Polyisocyanate in Betracht, wie sie z.B. von W. Siefken in Liebigs Annalen der Chemie 562, Seiten 75 - 136, beschrieben sind.

Bevorzugte Polyisocyanate a) sind Verbindungen der Formel Q(NCO)ₙ mit einem mittleren Molekulargewicht unter 800, worin n eine Zahl von 2 bis 4, Q einen aliphatischen C₄-C₁₂-Kohlenwasserstoffrest, einen cycloaliphatischen C₆-C₁₅-Kohlenwasserstoffrest, einen araliphatischen C₇-C₁₅-Kohlenwasserstoffrest oder einen heterocyclischen C₂-C₁₂-Rest mit 1 bis 3 Heteroatomen aus der Reihe Sauerstoff, Schwefel, Stickstoff bedeuten, beispielsweise (i) Diisocyanate wie Ethylendiisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-2-isocyanatomethyl-cyclopentan, 1-Isocyanato-3,3,5-trimethyl-5-isocyanatomethyl-cyclohexan, 2,4- und 2,6-Hexahydrotoluylendiisocyanat sowie beliebige Gemische dieser Isomeren, Hexahydro-1,3-und/oder -1,4-phenylendiisocyanat, Perhydro-2,4'-und/oder -4,4'-diphenylmethan-diisocyanat, 1,3- und 1,4-Phenylen-diisocyanat, 2,4- und 2,6-Toluylendiisocyanat sowie beliebige Gemische dieser Isomeren, Diphenylmethan-2,4'-und/oder-4,4'-diisocyanat, Naphthalin-1,5-diisocyanat, Uretdiongruppen enthaltende Polyisocyanate wie z.B. das Bis-(6-isocyanatohexyl)-uretdion oder das die Uretdion-Struktur enthaltende Dimere des 1-Isocyanato-3,3,5-trimethyl-5-isocyanatomethylcyclohexans und beliebige Mischungen der vorgenannten Polyisocyanate; (ii)tri-und höherfunktionelle Polyisocyanate wie die Isomeren der Triisocyanatotriphenylthiophosphatreihe und ihre Gemische; die Isomeren der Triisocyanatotriphenylmethanreihe (wie Triphenylmethan-4,4',4'-triisocyanat) und ihre Gemische; Polyphenyl-polymethylenpolyisocyanate, wie sie durch Anilin/Formaldehyd-Kondensation und anschließende Phosgenierung erhalten werden;
(iii) durch Allophanatisierung, Trimerisierung, Biuretisierung oder Urethanisierung aus den Polyisocyanaten (i) und/oder (ii) hergestellte Verbindungen, die mindestens 3 Isocyanatgruppen pro Molekül aufweisen. Beispiele für durch Trimerisierung hergestellte Polyisocyanate sind das durch Isocyanatbildung erhältliche Trimerisat des 1-Isocyanato-3,3,5-trimethyl-5-isocyanatomethylcyclohexans und die durch Trimerisierung von Hexamethylendiisocyanat, gegebenenfalls im Gemisch mit 2,4-Diisocyanatotoluol, erhältlichen Isocyanuratgruppen enthaltenden Polyisocyanate. Beispiele für durch Biuretisierung hergestellte Polyisocyanate sind Tris-(isocyanatohexyl)-biuret und dessen Gemische und seinen höheren Homologen, wie sie z.B. gemäß DE-OS 23 08 015 zugänglich sind. Beispiele für durch Urethanisierung hergestellte Polyisocyanate sind die Umsetzungsprodukte von Diisocyanaten (i) mit mindestens 3-wertigen, vorzugsweise 3- oder 4-wertigen niedermolekularen Polyolen in einem solchen Verhältnis, daß bei Umsetzung sämtlicher NCO-reaktiver Hydroxylgruppen der Polyole pro Molekül des erhaltenen Produkts durchschnittlich mindestens 2,5, vorzugsweise mindestens 3 freie Isocyanatgruppen enthalten sind. Solche Produkte umfassen beispielsweise die Umsetzungsprodukte von 1-Isocyanato-3,3,5-trimethyl-5-isocyanatomethyl-cyclohexan, von Hexamethylendiisocyanat und Toluylendiisocyanat (einschließlich dessen Isomerengemische) sowie Diisocyanatodiphenylmethan (einschließlich dessen Isomerengemische) mit unterschüssigen Mengen an C₃-C₁₀-Polyolen mit 3 oder 4 Hydroxylgruppen, wie Trimethylolethan oder -propan oder Pentaerythrit. Man kann diese Urethangruppen aufweisenden Polyisocyanate (iii) durch Umsetzung des niedermolekularen Polyols mit einem hohen Überschuß an Diisocyanat (i) und anschließende destillative Entfernung des überschüssigen Diisocyanats herstellen. Man kann anstelle der Urethangruppen-haltigen höherfunktionellen Polyisocyanate (iii) auch Verbindungen einsetzen, deren Urethangruppen ganz oder teilweise durch Harnstoffgruppen ersetzt sind; solche Verbindungen kann man durch Mitverwendung niedermolekularer Polyamine bei der Umsetzung mit den Diisocyanaten (i) erhalten.

Generell können als Aufbaukomponenten (b) für das Einbringen ionischer Gruppen Verbindungen eingesetzt werden, die pro Molekül neben mindestens einer NCO-reaktiven Gruppe noch mindestens eine kationische oder anionische Gruppe (wie z.B. Ammonium-, Phosphonium-, Sulfonium-, Carboxylat-, Sulfonat-, Phosphat-, Phosphonat- oder Phosphinatgruppe) enthalten. Als Aufbaukomponenten (b) für das Einbringen potentiell ionischer Gruppen eignen sich Verbindungen, die pro Molekül neben mindestens einer NCO-reaktiven Gruppe mindestens eine zur Bildung einer ionischen Gruppe befähigte Gruppe enthalten. Solche potentiell ionischen Gruppen sind beispielsweise Amino-, Phosphano-, Thio-, Carboxyl-, Sulfo-, Phosphonsäure-, Phosphorsäure- und Phosphinsäuregruppen.

Bevorzugte Komponenten (b) sind also vor allem:
1. Verbindungen, die basische mit wässrigen Säuren neutralisierbare oder quaternierbare tertiäre Aminogruppen aufweisen:
   a) einwertige Alkohole, insbesondere alkoxylierte aliphatische, cycloaliphatische, aromatische und heterocyclische, sekundäre Amine, z.B. N,N-Dimethylethanolamin, N,N-Diethylethanolamin und N,N-Dibutylethanolamin, ferner 1-Dimethylamino-propanol-(2), N-Methyl-N-β-hydroxyethyl-anilin, N-Methyl-N-β-hydroxypropyl-anilin, N-Ethyl-N-β-hydroxyethyl-anilin, N-Butyl-N-β-hydroxyethyl-anilin, N-Oxethylpiperidin, N-Oxethylmorpholin, α-Hydroxyamylpyridin und γ-Hydroxyethyl-chinolin,
   b) Diole und Triole, insbesondere alkoxylierte aliphatische, cycloaliphatische, aromatische und heterocyclische primäre Amine, z.B. N-Methyldiethanolamin, N-Butyldiethanolamin, N-Oleyldiethanolamin, N-Cyclohexyldiethanolamin, N-Methyldiisopropanolamin, N-Cyclohexyldiethanolamin, N-Methyldiisopropanolamin, N-Cyclohexyldiethanolamin, N,N-Dioxyethylanilin, N,N-Dioxyethyl-m-toluidin, N,N-Dioxyethyl-p-toluidin, N,N-Dioxypropylnaphthylamin, Dioxyethylpiperazin, polyethoxyliertes Butyldiethanolamin, polypropoxyliertes Methyldiethanolamin (wobei im Falle der polyalkoxylierten Produkte das mittlere Molekulargewicht 250 bis 3000 beträgt), Tris-[2-hydroxypropyl-(1)]-amin, N,N'-Dimethyl-N,N'-bis-oxyethylhydrazin und N,N'-Dimethyl- N,N'-bis-oxypropyl-ethylendiamin,
   c) Aminoalkohole, erhalten z.B. durch Hydrierung von Additionsprodukten von Alkylenoxyd und Acrylnitril an primäre Amine, z.B. N-Methyl-N-(3-amino-propyl)-ethanolamin, N-Cyclohexyl-N-(3-amino-propyl)-propanol-(2)-amin, N,N-Bis-(3-aminopropyl)-ethanolamin und N-(3-Amino-propyl)-diethanolamin,
   d) Amine, z.B. N,N-Dimethyl-ethylendiamin, 1-Diethylamino-4-amino-pentan, α-Aminopyridin, 3-Amino-N-ethyl-carbazol, N,N-Dimethyl-propylendiamin, N-Aminopropyl-piperidin, N-Aminopropyl-morpholin, N-Aminopropylethylenimin und 1,3-Bis-piperidino-2-aminopropan,
   e) Diamine, Triamine, insbesondere durch Hydrierung von Anlagerungsprodukten von Acrylnitril an primäre und disekundäre Amine, z.B. Bis-(3-aminopropyl)-methylamin, Bis-(3-aminopropyl)-cyclohexylamin, Bis-(3-aminopropyl)-anilin, Bis-(3-aminopropyl)-toluidin, Diaminocarbazol, Bis-(aminopropoxyethyl)-butylamin und Tris-(aminopropyl)-amin;
2. Verbindungen, die zur Salzbildung befähigte Carboxyl- oder Hydroxylgruppen aufweisen:
   a) Hydroxy- und Mercapto-carbonsäuren, wie Glykolsäure, Thioglykolsäure, Milchsäure, Trichlormilchsäure, Dimethylolpropionsäure, Äpfelsäure, Dioxymaleinsäure, Dioxyfumarsäure, Weinsäure, Dioxyweinsäure, Schleimsäure, Zuckersäure, Zitronensäure, Salicylsäure, 2,6-Dioxybenzoesäure, Protocatechusäure, α-Resorcylsäure, β-Resorcylsäure, Hydrochinon-2,5-dicarbonsäure, 4-Hydroxyisophthalsäure, 4,6-Dihydroxyisophthalsäure, Oxyterephthalsäure, 5,6,7,8-Tetrahydro-naphthol-(2)-carbonsäue-(3), 1-Hydroxynaphthoesäure-(2), 2,8-Dihydroxynaphthoesäure-(3), β-Oxypropionsäure und m-Oxybenzoesäure,
   b) Polycarbonsäuren, wie Sulfondiessigsäure, Nitrilotriessigsäure, Ethylendiamintetraessigsäure, Diglykolsäure, Thiodiglykolsäure, Methylen-bis-thioglykolsäure, Malonsäure, Oxalsäure, Bernsteinsäure, Glutarsäure, Adipinsäure, Maleinsäure, Fumarsäure, Gallussäure, Phthalsäure, Tetrachlorphthalsäure, Isophthalsäure, Terephthalsäure, Naphthalintetracarbonsäure-(1,4,5,8), o-Tolylimidodiessigsäure, β-Naphthylimidodiessigsäure, Pyridin-dicarbonsäure und Dithiodipropionsäure,
   c) Aminocarbonsäuren, wie Oxalursäure, Anilidoessigsäure, 2-Hydroxycarbazol-carbonsäure-(3), Glycin, Sarkosin, Methionin, α-Alanin, β-Alanin, 6-Aminocapronsäure, 6-Benzylamino-2-chlorcapronsäure, 4-Aminobuttersäure, Asparaginsäure, Glutaminsäure, Histidin, Anthranilsäure, 2-Ethylaminobenzoesäure, N-(2-Carboxyphenyl)-aminoessigsäure, 2-(3'-Aminobenzolsulfonyl-amino)-benzoesäure, 3-Aminobenzoesäure, 4-Aminobenzoesäure, N-Phenylaminoessigsäure, 3,4-Diaminobenzoesäure, 5-Aminobenzoldicarbonsäure und 5-(4'-Aminobenzoyl-amino)-2-aminobenzoesäure,
   d) Hydroxy- und Carboxy-sulfonsäuren, wie 2-Hydroxyethansulfonsäure, Phenolsulfonsäure-(2), Phenolsulfonsäure-(3), Phenolsulfonsäure-(4), Phenoldisulfonsäure-(2,4), Sulfoessigsäure, m-Sulfobenzoesäure, p-Sulfobenzoesäure, Benzoesäure-(1)-disulfonsäure-(3,5), 2-Chlorbenzoesäure-(1)-sulfonsäure-(4), 2-Hydroxybenzoesäure-(1)-sulfonsäure-(5), Naphthol-(1)-sulfonsäure, Naphthol-(1)-disulfonsäure, 8-Chlor-naphthol-(1)-disulfonsäure, Naphthol(1)-trisulfonsäure, Naphthol-(2)-sulfonsäure-(1), Naphthol-(2)-trisulfonsäure, 1,7-Dihydroxynapthalinsulfonsäure-(3), 1,8-Dihydroxynaphthalindisulfonsäure-(2,4), Chromotropsäure, 2-Hydroxynaphthoesäure-(3)-sulfonsäure-(6) und 2-Hydroxycarbazolsulfonsäure-(7), und
   e) Aminosulfonsäuren, wie Amidosulfonsäure, Hydroxylaminmonosulfonsäure, Hydrazindisulfonsäure, Sulfanilsäure, N-Phenylaminomethan-sulfonsäure, 4,6-Dichloranilin-sulfonsäure-(2), Phenylendiamin-(1,3)-disulfonsäure-(4,6),
      N-Acetylnaphthylamin-(1)-sulfonsäure-(3), Naphthylamin-(1)-sulfonsäure, Naphthylamin-(2)-sulfonsäure, Naphthylamin-(1)-sulfonsäure, Naphthylamintrisulfonsäure, 4,4'-Di-(p-aminobenzoylamino)-diphenylharnstoff-disulfonsäure-(3,3'), Phenylhydrazindisulfonsäure-(2,5), 2,3-Dimethyl-4-amino-azobenzoldisulfonsäure-(4',5), 4'-Aminostilbendisulfonsäure-(2,2')-(4-azo-4)anisol, Carbazoldisulfonsäure-(2,7), Taurin, Methyltaurin, Butyltaurin, 3-Aminobenzoesäure-11)-sulfonsäure-15), 3-Aminotoluol-N-methansulfonsäure, 6-Nitro-1,3-dimethylbenzol-4-sulfaminsäure, 4,6-Diaminobenzoldisulfonsäure-(1,3), 2,4-Diaminotoluolsulfonsäure-(5), 4,4'-Diaminodiphenyldisulfonsäure-(2,2'), 2-Aminophenolsulfonsäure-(4), 4,4'-Diaminodiphenylethersulfonsäure-(2), 2-Amino-anisol-N-methansulfonsäure, 2-Aminodiphenylaminsulfonsäure.
      Als salzbildende Mittel kommen für die Gruppe 1 anorganische und organische Säuren sowie Verbindungen mit reaktiven Halogenatomen und die entsprechenden Ester starker Säuren in Betracht. Einige Beispiele sind:
      Salzsäure, Salpetersäure, unterphosphorige Säure, Amidosulfonsäue, Hydroxylaminmonosulfonsäure, Ameisensäure, Essigsäure, Glykolsäure, Milchsäure, Chloressigsäure, Bromessigsäureethylester; Methylchlorid, Butylbromid, Dimethylsulfat, Diethylsulfat, Benzylchlorid, p-Toluolsulfonsäuremethylester, Methylbromid, Ethylenchlorhydrin, Ethylenbromhydrin, Glycerin-α-bromhydrin, Chloressigester, Chloracetamid, Bromacetamid, Dibromethan, Chlorbrombutan und Dibrombutan.

Für die Verbindungen der Gruppe 2 eignen sich anorganische und organische Basen als Salzbildner, z.B. Natriumhydroxyd, Kaliumhydroxyd, Kaliumcarbonat, Natriumhydrogencarbonat, Ammoniak, primäre, sekundäre und tertiäre Amine.

Schließlich können auch organische Phosphorverbindungen als Verbindungen, die zur Salzbildung fähig sind, verwendet werden, und zwar sowohl einbaufähige basische Phosphine, wie Diethyl-β-hydroxyethylphosphin, Methyl-β-hydroxyethyl-phosphin und Tris-β-hydroxymethylphosphin. als auch Bis-(α-hydroxyisopropyl)-phosphinsäure, Hydroxyalkanphosphonsäure und Phosphorsäure-bis-glykolester.

Die Umsetzung der Reaktionsteilnehmer kann mit oder auch ohne Lösungsmittel erfolgen.

Bevorzugte Komponenten (b) sind also Polyhydroxycarbonund -sulfonsäuren, Polyaminocarbon- und -sulfonsäuren und die Salze dieser Verbindungen (vor allem Alkali- und Ammoniumsalze, insbesondere die Natrium- und Kaliumsalze).

Unter den Komponenten (b) ist insbesondere die Klasse der Sulfonatdiole bevorzugt; geeignete Verbindungen dieser Klasse sind beispielsweise in der DE-OS 24 46 440 beschrieben. Sie entsprechen im allgemeinen der Formel 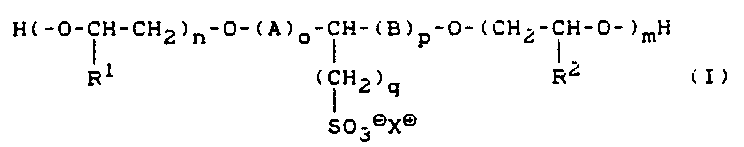 worin
- A und B: für gleiche oder verschiedene zweiwertige aliphatische Kohlenwasserstoffreste mit 1 bis 6 Kohlenstoffatomen stehen,
- R¹ und R²: unabhängig voneinander für Wasserstorf, einen aliphatischen Kohlenwasserstoffrest mit 1 bis 4 Kohlenstoffatomen oder einen Phenylrest stehen,
- X^{⊕}: für ein Alkalimetallkation oder eine gegebenenfalls substituierte Ammoniumgruppe steht,
- n und m: unabhängig voneinander für Null oder Zahlen von 1 bis 30 stehen,
- o und p: für jeweils Null oder 1 stehen und
- q: für Null, 1 oder 2 steht.

Bevorzugte Verbindungen (b) der Formel I entsprechen den Formeln 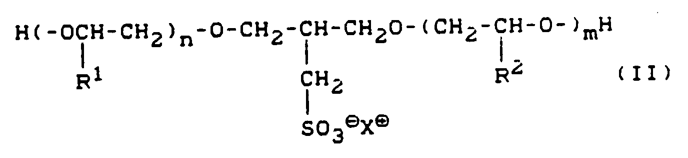 und 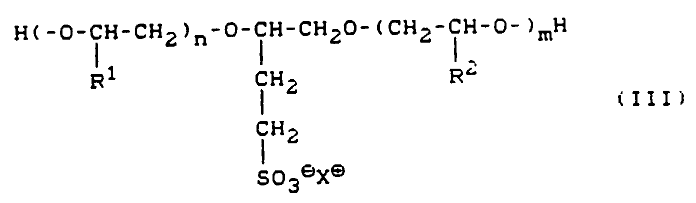 worin
- R¹ und R²: jeweils unabhängig voneinander Wasserstoff oder Methyl, und
- n und m: jeweils unabhängig voneinander Null oder Zahlen von 1 bis 3 bedeuten und
- X^{⊕}: die Bedeutung wie in Formel I hat.

Die Verbindungen (b) werden in einer solchen Menge eingesetzt, daß die erfindungsgemäßen blockierten Polyisocyanate den anspruchsgemäßen Gehalt ionischer Gruppen enthalten. Handelt es sich bei den ionischen Gruppen um solche, die durch Blockierung der Isocyanatgruppen mit anorganischen Blockierungsmitteln - speziell mit Natriumhydrogensulfit - eingeführt worden sind, so wird der Gehalt an ionischen Gruppen naturgemäß durch die Anzahl der zu blockierenden Isocyanatgruppen wesentlich mitbestimmt und kann deshalb ohne weiteres bis zu 75 Milliäquivalente pro 100 g blockiertem Polyisocyanat betragen. Verwendet man organische NCO-Blockierungsmittel, die - anders als beispielsweise Natriumhydrogensulfit - keine ionischen Gruppen in das Polyisocyanat-Molekül einführen, so liegt der Gehalt ionischer Gruppen eher am unteren Ende der definierten Bandbreite und beträgt vorzugsweise 2 bis 25 Milliäquivalente pro 100 g blockiertem Polyisocyanat -dies also für den Fall, daß die ionischen Gruppen bei der Deblockierung der blockierten Isocyanatgruppen Bestandteil des deblockierten Polyisocyanats bleiben.

Besonders bevorzugte Komponenten (b) der Formel I sind Sulfonatdiole der Formel 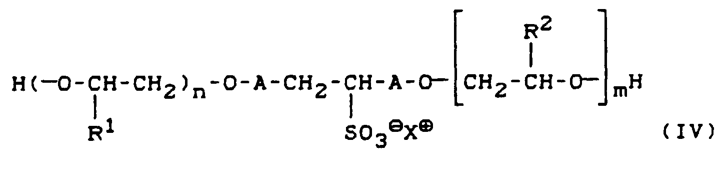 worin
- R¹, R²: unabhängig voneinander Wasserstoff oder Methyl,
- A: einen zweiwertigen aliphatischen C₁-C₄-Kohlenwasserstoffrest, vorzugsweise Methylen,
- X^{⊕}: ein Alkalimetall-Kation oder eine Ammoniumgruppe und
- n und m: eine ganze Zahl von 1 bis 20 bedeuten.

Bevorzugte Kationen X^{⊕} umfassen Kalium-, Natrium- und Ammoniumionen, wobei der Ammonium-Stickstoff mit bis zu 4 organischen C₁-C₁₀-Resten substituiert sein kann, wobei anstelle zweier solcher Substituenten auch ein zweiwertiger 4- oder 5-gliedriger, gegebenenfalls Heteroatome (wie Sauerstoff, Stickstoff, Schwefel) enthaltender Rest treten kann, der zusammen mit dem zu X^{⊕} gehörenden Stickstoffatom einen Heterocyclus, beispielsweise einen Morpholin- oder Hexahydropyridin-Ring bildet.

Bevorzugte Komponenten (c) umfassen ein- und mehrwertige, insbesondere ein-, zwei- und dreiwertige Polyetheralkohole. Geeignete Komponenten (c) umfassen also vor allem auf ein-, zwei- oder dreiwertigen Alkoholen gestartete Poly-C₂-C₆-, vorzugsweise -C₂-C₃-alkylenether. Anstelle von Hydroxyl-Endgruppen können die Polyalkylenether (c) auch Amino- oder Mercapto-Endgruppen tragen.

Die erfindungsgemäßen blockierten Polyisocyanate weisen vorzugsweise einen Gehalt an eingebauten Polyalkylenethergruppen, berechnet als wiederkehrende Alkylenoxygruppen [O-Alkylen-]ₓ, von 3 bis 25 Gew.-%, bezogen auf blockiertes Polyisocyanat, auf (unabhängig davon, ob die Polyalkylenethergruppen über die Komponenten (b), (c) oder (d) eingeführt worden sind), wobei für Zwecke der Hydrophob-/Oleophobausrüstung von Textilien ein Gehalt von 3 bis 15 Gew.-% und für Zwecke der Textilveredelung ("Knitterfreiausrüstung") ein Gehalt von 10 bis 25 Gew.-% besonders bevorzugt werden. Vorzugsweise enthalten die Polyalkylenethergruppen zu 50 bis 100 Gew.-% Ethylenoxideinheiten und neben diesen vorzugsweise ausschließlich Propylenoxideinheiten. Bevorzugt sind dementsprechend also Ethylenoxid-Polyether und Ethylenoxid/Propylenoxid-Mischpolyether mit einem überwiegenden Gewichtsanteil an Ethylenoxideinheiten. Reine Ethylenoxid-Polyether sind bevorzugt. Die eingebauten Polyethylenoxidblöcke können ein mittleres Molekulargewicht von 500 bis 6000, vorzugsweise von 500 bis 3000, besitzen.

Mögliche Komponenten (e) für die Herstellung der erfindungsgemäßen blockierten Polyisocyanate umfassen von (b) und (c) verschiedene NCO-reaktive Verbindungen, beispielsweise Polyhydroxylverbindungen, die pro Molekül 2 bis 8, vorzugsweise 2 oder 3 Hydroxylgruppen aufweisen und ein (mittleres) Molekulargewicht von bis zu 10.000, vorzugsweise bis zu 6000, aufweisen. Dabei kommen sowohl niedermolekulare Polyhydroxylverbindungen mit Molekulargewichten von 62 bis 499 als auch höhermolekulare Polyhydroxylverbindungen mit mittleren Molekulargewichten von mindestens 500, vorzugsweise von mindestens 1000, in Betracht.

Niedermolekulare Polyhydroxylverbindungen ("Kettenverlängerungsmittel") umfassen die verschiedenartigsten Diole, wie beispielsweise
(i) Alkandiole wie Ethylenglykol, Propylenglykol-1,3 und Propylenglykol-1,2, Butandiol-1,4, Pentandiol-1,5, Dimethylpropandiol-1,3 und Hexandiol-1,6;
(ii) Etherdiole, die im Falle von Polyalkylenetherdiolen nicht mehr als 4 wiederkehrende Alkylenoxygruppen enthalten, wie Diethylenglykol, Triethylenglykol oder 1,4-Phenylen-bis-(β-hydroxyethylether);
(iii) Esterdiole der Formeln
   HO-(C₂-C₆-Alkylen)-CO-O-(C₂-C₆-Alkylen)-OH und
   HO-(C₂-C₆-Alkylen)-O-CO-R-O-(C₂-C₆-Alkylen)-OH
   in denen
   R einen Alkylen- bzw. Arylenrest mit 1 bis 10, vorzugsweise 2 bis 6, C-Atomen,
   bedeutet,
   z.B. δ-Hydroxybutyl-ε-hydroxy-capronsäureester, ω-Hydroxyhexyl-γ-hydroxybuttersäureester, Adipinsäure-(β-hydroxyethyl)ester, Terephthalsäure-bis(β-hydroxyethyl)ester und α-Methyl-α-hydroxymethyl-propionsäure-neopentylglykolmonoester ("Esterdiol 204").

Als "Kettenverlängerungsmittel" können auch Polyamine, vorzugsweise aliphatische oder aromatische Diamine verwendet werden, beispielsweise Ethylendiamin, Propylendiamin-1,2 und -1,3, 1,4-Tetramethylendiamin, 1,6-Hexamethylendiamin, N,N'-Diisobutyl-1,6-hexamethylendiamin, 1,11-Undecamethylendiamin, Cyclohexan-1,3- und -1,4-diamin sowie deren Gemische, 1-Amino-3,3,5-trimethyl-5-aminomethylcyclohexan, 2,4-und 2,6-Hexahydrotoluylendiamin sowie deren Gemische, Perhydro-2,4'- und 4,4'-diaminodiphenylmethan und dessen 3,3'-Dimethylderivat und Bis-(3-aminopropyl)-methylamin; p-Xylylendiamin, Bisanthranilsäureester gemäß den DE-OS 20 40 644 und 21 60 590, 3,5- und 2,4-Diaminobenzoesäreester gemäß DE-OS 20 25 900, die in den DE-OS 18 03 635, 20 40 650 und 21 60 589 beschriebenen estergruppenhaltigen Diamine, sowie 3,3'-Dichlor-4,4'-diamino-diphenylmethan, Toluylendiamin, 4,4'-Diaminodiphenylmethan und 4,4'-Diaminodiphenyldisulfid.

Als Diamine in diesem Sinne sind auch Hydrazin, Hydrazinhydrat und substituiere Hydrazine zu betrachten, wie z.B. Methylhydrazin, N,N'-Dimethylhydrazin und deren Homologe sowie Säuredihydrazide, z.B. Carbodihydrazid, Oxalsäuredihydrazid, die Dihydrazide von Malonsäure, Bernsteinsäure, Glutarsäure, Adipinsäure, β-Methyladipinsäure, Sebacinsäure, Hydracrylsäure und Terephthalsäure, Semicarbazido-alkylen-hydrazide, wie z.B. β-Semicarbazidopropionsäurehydrazid (DE-OS 17 70 591), Semicarbazidoalkylencarbazinester, wie z.B. 2-Semicarbazidoethylcarbazinester (DE-OS 19 18 504) oder auch Aminosemicarbazid-Verbindungen, wie z.B. β-Aminoethylsemicarbazido-carbonat (DE-OS 19 02 931).

Mögliche Komponenten (e) für die Herstellung der erfindungsgemäßen blockierten Polyisocyanate sind z.B. auch 3- und 4-wertige Alkohole, wie Glycerin, Trimethylolethan, -propan und -hexan sowie Pentaerythrit.

Weitere Komponenten (e) sind die in der Polyurethanchemie üblichen OH-, SH- und/oder NH-terminierten Polyester, Polycarbonate, Polyacetale wie beispielsweise einfache Polyesterdiole eines unter 2000 liegenden durchschnittlichen Molekulargewichts, beispielsweise hergestellt durch Umsetzung von Adipinsäure oder Phthalsäure mit überschüssigen Mengen an Alkandiolen wie Ethylenglykol, Tetramethylenglykol oder Hexamethylenglykol.

Es hat sich als vorteilhaft erwiesen, die Ausgangskomponenten für die Herstellung der erfindungsgemäßen blockierten Polyisocyanate so auszuwählen, daß verzweigte Produkte entstehen. Für die Zwecke der vorliegenden Erfindung vorteilhafte Produkte entstehen, wenn die Gesamtfunktionalität der erfindungsgemäßen Polyisocyanate über 2,0, vorzugsweise über 2,5, insbesondere 2,8 bis 4,0 beträgt. Der Begriff "Gesamtfunktionalität" im Sinne der Erfindung bedeutet die durchschnittliche Anzahl der (blockierten) Isocyanatgruppen pro Molekül. Man kann also beispielsweise Polyisocyanate (a) mit durchschnittlich mehr als 2,0, vorzugsweise mehr als 2,5, insbesondere 2,8 bis 4,0 Isocyanatgrupppen pro Molekül einsetzen, sofern man als Reaktionspartner Verbindungen mit 2 NCO-reaktive Gruppen pro Molekül einsetzt. Da es für die Zwecke der Erfindung selbstverständlich unerheblich ist, auf welche Weise Verzweigungsstellen entstehen, kann man Isocyanate mit 3 oder mehr Isocyanatgruppen, wie die oben unter a) aufgezählten Triisocyanate einschließlich der aus Diisocyanaten zugänglichen Trimerisate, Biurete, Allophanate und Urethane, durch die äquivalente Menge polyfunktioneller NCO-reaktiver Verbindungen, wie z.B. Triole, ersetzen. Der Fachmann wird die Bedingungen so wählen, daß eine Gelierung zuverlässig vermieden wird.

Die für die Herstellung der erfindungsgemäßen blockierten Polyisocyanate brauchbaren nicht-blockierten Zwischenprodukte können hergestellt werden, indem man die Polyisocyanate (a) mit den Komponenten (b), (c) und gegebenenfalls (e) gleichzeitig oder in beliebiger Reihenfolge nacheinander umsetzt. Eine bevorzugte Reaktionstemperatur liegt bei 50 bis 120°C; die Reaktion ist im allgemeinen innerhalb 1 bis 3 Stunden abgeschlossen.

Erfindungsgemäß werden die freien Isocyanatgruppen enthaltenden aus (a), (b), (c) und gegebenenfalls (e) entstandenen Polyisocyanate in einem letzten Reaktionsschritt mit einem NCO-Blockierungsmittel (d) umgesetzt - vorausgesetzt, daß nicht aufgrund der Verwendung anorganischer Blockierungsmittel wie Alkalihydrogensulfiten der Einbau der ionischen Gruppen und die Blockierung naturgemäß gleichzeitig erfolgen.

Bei der Verwendung anorganischer Blockierungsmittel wie der Alkalihydrogensulfite arbeitet man nach einer bevorzugten Ausführungsform so, daß man - abgesehen von den durch das Blockierungsmittel einzuführenden ionischen Gruppen - zusätzlich ionische Gruppen der oben beschriebenen Art in einer Menge von 2 bis 25 meq pro 100 g Fertigprodukt (also erfindungsgemäßem blockiertem Polyisocyanat) anstrebt. Nach dieser bevorzugten Ausführungsform hergestellte Produkte weisen besonders vorteilhafte Eigenschaften dann auf, wenn auch hier zuerst die Modifizierung und dann erst die Blockierung erfolgen. Für diesen Sonderfall hat sich erwiesen, daß die Eigenschaften der Fertigprodukte besonders vorteilhaft sind, wenn die ionischen Gruppen der weiter oben beschriebenen Art Kationen sind.

Geeignete Blockierungsmittel (d) sind insbesondere Verbindungen mit vorzugsweise einer gegenüber Isocyanatgruppen reaktionsfähigen Gruppe, die mit organischen Isocyanaten bei über 50°C, vorzugsweise zwischen 60 und 100°C, eine Additionsreaktion eingehen. Geeignete derartige Blockierungsmitel sind z.B. sekundäre oder tertiäre Alkohole, wie Isopropanol oder tert.-Butanol, C-H-acide Verbindungen, wie z.B. MalonsäuredialkylesLer, Acetylaceton, Acetessigsäurealkylester, Oxime, wie z.B. Formaldoxim, Acetaldoxim, Methylethylketonoxim, Cyclohexanonoxim, Acetophenonoxim, Benzophenonoxim oder Diethylglyoxim, Lactame, wie z.B. ε-Caprolactam, σ-Valerolactam, γ-Butyrolactam, Phenole, wie Phenol, o-Methylphenol, N-Alkylamide, wie z.B. N-Methyl-acetamid, Imide, wie Phthalimid, Imidazol und Triazol, Vorzugsweise werden erfindungsgemäß Methylethylketoxim, ε-Caprolactam und C-H-acide Verbindungen, wie z.B. Malonsäure-C₁-C₄-alkylester, insbesondere Malonsäurediethylester, Acetessigsäure-C₁-C₄-alkylester, insbesondere Acetessigsäureethylester, oder Acetylaceton eingesetzt.

Zur Herstellung der erfindunggemäßen blockierten Polyisocyanate werden die unblockierten Polyisocyanate der ersten Reaktionsstufe(n) vorzugsweise mit einer solchen Menge Blockierungsmittel zur Reaktion gebracht, welche einem Äquivalentverhältnis von NCO-Gruppen: NCO-reaktive Gruppen (des Blockierungsmittels) von 1:0,95 bis 1:1,15, vorzugsweise 1:1 bis 1:1,1 entspricht. Bei Einsatz von aktiven Methylengruppen aufweisenden Blockierungsmitteln ist die Verwendung von basischen Katalysatoren, wie z.B. Diazabicyclooctan, Triethylamin, Alkalialkoholaten oder Alkaliphenolaten wie beispielsweise Natriumethylat oder Natriumphenolat vorteilhaft. Bei Verwendung von Blockierungsmitteln mit OH- oder NH-Gruppierungen kann die Katalyse der Blockierungsreaktion mit einem Metallsalz, wie beispielsweise Dibutylzinndilaurat oder Zinnoctoat von Vorteil sein.

Die Durchführung des letzten Reaktionsschrittes ist denkbar einfach: Im Rahmen des bereits angegebenen Zeitund Temperaturbereichs kann die Reaktion solange durchgeführt werden, bis alle NCO-Gruppen verbraucht sind.

Obwohl es oft von besonderem Vorteil ist, auf organische Lösungsmittel völlig zu verzichten, können bei der Herstellung der erfindungsgemäßen blockierten Polyisocyanate natürlich auch organische Lösungsmittel eingesetzt werden. Im Falle zähelastischer oder fester erfindungsgemäßer blockierter Polyisocyanate ist die Mitverwendung organischer Lösungsmittel regelmäßig angebracht.

Bevorzugte organische Lösungsmittel umfassen unter anderem Ketone wie Aceton, Methylethylketon und Cyclohexanon, Ether wie Diethyl- und Dibutylether, Tetrahydrofuran und Dioxan, Ether und/oder Ester von Ethylenglykol und Propylenglykol wie Ethylenglykolmonomethyl- und - monoethylether, Ethylenglykolmonomethyl- und -monoethyletheracetat, C₂-C₄-Carbonsäure-C₁-C₆-alkylester wie Essigsäureethyl- und -butylester, Amide wie N,N-Dimethylformamid, N,N-Dimethylacetamid und N-Methylpyrrolidon, Sulfolan, N-Methyl-caprolactam, Propylenglykoldiacetat, Benzin, Aromaten wie Benzol, Toluol und Xylole. Die Verwendung organischer Lösungsmittel, die NCO-reaktive Gruppen enthalten, wie z.B. Methanol, Ethanol n- oder Isopropanol, im Laufe der Herstellung der erfindungsgemäßen blockierten Polyisocyanate wird nicht empfohlen. Die organischen Lösungsmittel können, falls gewünscht, aus den erfindungsgemäßen blockierten Polyisocyanaten wieder entfernt werden, z.B. durch Destillation.

Die erfindungsgemäßen blockierten Polyisocyanate eignen sich hervorragend zur Herstellung wäßriger Dispersionen. Sie finden auch bevorzugt in dieser Form Verwendung. Der Gehalt dieser wäßrigen Dispersionen an erfindungsgemäßen blockierten Polyisocyanaten kann innerhalb weiter Grenzen schwanken und beträgt in der Regel 20 bis 80, vorzugsweise 25 bis 50 Gew.-%. Das Dispergieren der erfindungsgemäßen blockierten Polyisocyanate kann durch durch Zugabe des blockierten Polyisocyanat zu Wasser erfolgen. Die Vereinigung erfolgt zweckmäßigerweise unter Rühren. Der Dispergiervorgang kann in Abwesenheit oder in Gegenwart organischer, vorzugsweise wassermischbarer, Lösungsmittel erfolgen. Als solche organischen Lösungsmittel eignen sich die oben genannten Lösungsmittel und zusätzlich auch jene Verbindungen, die als Lösungsmittel wirken können und NCO-reaktive Gruppen tragen, wie z.B. Alkohole wie Methanol, Ethanol, n- und Isopropanol.

Die Verwendung - vorzugsweise wassermischbarer - organischer Lösungsmittel wird besonders dann bevorzugt, wenn die wäßrige Dispersion mehr als 50 Gew.-% erfindungsgemäßes blockiertes Polyisocyanat enthalten soll. So kann man beispielsweise nach dem letzten Reaktionsschritt das erfindungsgemäße blockierte Polyisocyanat in einem wasserverdünnbaren organischen Lösungsmittel wie Isopropanol bis zu einem Gehalt an erfindungsgemäßen blockierten Polyisocyanat von 80 bis 95 Gew.-%, bezogen auf die Summe von organischem Lösungsmittel und erfindungsgemäßem blockiertem Polyisocyanat lösen; die erhaltene organische Lösung läßt sich dann mit Wasser weiter verdünnen.

Man kann auf die Verwendung organischer Lösungsmittel beim Dispergieren auch oft verzichten, weil die erfindungsgemäßen blockierten Polyisocyanate mit Wasser meistens spontan Dispersionen bilden.

Die Temperatur beim Dispergieren kann im allgemeinen 20 bis 100, vorzugsweise 30 bis 80°C betragen. Die erhaltenen wäßrigen Dispersionen enthalten die erfindungsgemäßen blockierten Polyisocyanate im allgemeinen als Teilchen mit einem mittleren Durchmesser d₅₀ von 50 bis 500, vorzugsweise 100 bis 300 mµ.

Der mittlere Teilchendurchmesser d₅₀ ist der Durchmesser, oberhalb und unterhalb dessen jeweils 50 Gew.-% der Teilchen liegen. Er kann mittels Ultrazentrifugen-Messungen (W. Scholtan, H. Lange, Kolloid. Z. und Z. Polymere 250 (1972), 782 - 796) oder mittels Elektronenmikroskopie und anschließende Teilchenauszählung (G. Kämpf, H. Schuster, Angew. Makromolekulare Chemie 14 (1970), 111 - 129) bestimmt werden.

Wäßrige Dispersionen, welche die erfindungsgemäßen blockiertem Polyisocyanate als disperse Phase enthalten, können bei Raumtemperatur eine Lagerstabilität von über 1 Jahr und bei 50°C eine Lagerstabilität von über 12 Wochen erreichen.

Die erfindungsgemäßen blockierten Polyisocyanate können, vorzugsweise in Form ihrer wäßrigen Dispersionen, zur Textilhochveredelung und für die Hydrophob-/Oleophobausrüstung von Textilien verwendet werden.

Die Textilhochveredelung umfaßt unter anderem die Knitterfestausrüstung von Textilmaterialien aus natürlicher oder regenerierten Cellulose (Baumwolle, Viskose). Die Knitterfestausrüstung hat zum Ziel, während des normalen Gebrauchs, vor allem aber auch beim Waschen und Trocknen, Dimension, Form und glattes Aussehen weitgehend zu bewahren. Es gilt heute als gesichert, daß zu diesem Zweck die Cellulosefasern vernetzt werden müssen. Weil sich für die Textilindustrie Ausrüstungsmittel langfristig nur noch dann durchsetzen können, wenn sie aus wäßriger Flotte applizierbar sind, kommen für die Knitterfestausrüstung nur wasserlösliche oder wasserdispergierbare Produkte in Frage. Bislang hat man als Knitterfestmittel vorzugsweise Methylolgruppen-tragende Verbindungen wie Dimethylolethylenharnstoff, Dimethyloldihydroxyethylenharnstoff oder Harnstoff/- beziehungsweise Melamin/Formaldehyd-Kondensate verwendet. Seit jedoch die Formaldehyd-Diskussion auch solche Produkte umfaßt, die Formaldehyd in nur sehr geringen Mengen abspalten, wünscht man Knitterfestmittel, die frei von Methylolgruppen sind.

Man hat auch versucht, die für die Knitterfestigkeit notwendige Vernetzung der Cellulosefasern unter Verwendung von Polycarbonsäuren in Gegenwart von Katalysatoren zu bewerkstelligen (vergleiche z.B. EP-A 354 648). Durch dieses Verfahren werden allerdings Reiß- und Scheuerfestigkeit der so ausgerüsteten Cellulosefasern sehr negativ beeinträchtigt.

Auch der Einsatz unblockierter oder blockierter Polyisocyanate als Knitterfestmittel ist schon diskutiert worden (Textilveredelung 2 (1967), Nr. 7, 441 ff.; Textilveredelung 13 (1978), Nr. 11, 454 - 457; Ind. Eng. Chem. Prod. Res. Dev., Vol. 21, No. 1 (1982), 4-11). Die Verbesserung der Knitterfestigkeit läßt aber, vor allem in Bezug auf Trockenknitterwinkel, Waschkrumpf und Selbstglättung, noch manche Wünsche offen.

Es hat sich gezeigt, daß die erfindungsgemäßen blockierten Polyisocyanate die Nachteile des Standes der Technik nicht oder nur in geringerem Maße aufweisen und die Knitterfestmittel des Standes der Technik erfreulich übertreffen.

Die erfindungsgemäßen blockierten Polyisocyanate werden meist den wäßrigen Imprägnierflotten zugesetzt. Der Auftrag der Flotte kann, wie in der Textilindustrie üblich, beispielsweise durch Foulardieren, Pflatschen, Sprühen oder durch Schaumauftrag, erfolgen. Die Konzentration der erfindungsgemäßen blockierten Polyisocyanate kann innerhalb weiter Grenzen schwanken; sie richtet sich vor allem nach der Applikationsmethode. Bezogen auf auszurüstende Textilien, werden die Knitterfestmittel der Imprägnierflotte in der Regel in Mengen von 0,5 bis 5 Gew.-% zugesetzt. Der pH-Wert der Flotte wird im allgemeinen auf 4 bis 7, vorzugsweise 5 bis 6 eingestellt. Selbstverständlich kann die Flotte neben den erfindungsgemäßen blockierten Polyisocyanaten noch andere Zusätze wie Antistatika, Weichmachungsmittel, Schiebefestmittel, Hydrophobierungsmittel wie Polysiloxane und dergleichen enthalten.

Das Trocknen der mit der Imprägnierflotte behandelten Textilien erfolgt zweckmäßigerweise bei 80 bis 110°C; anschließend empfiehlt sich ein weiteres Aufheizen auf 130 bis 200°C für 30 sec bis 6 Minuten, damit die blockierten Isocyanatgruppen zur Reaktion gebracht werden und danach dann die ihnen eigene Knitterfestwirkung entwickeln können.

Die erfindungsgemäßen blockierten Polyisocyanate sind aufgrund ihrer hydrophilen Gruppen nicht nur in Wasser selbstdispergierbar, sondern sie können auch als Emulgatoren für hydrophobe Stoffe wirken. Diese Eigenschaft macht sie in Kombination mit wasser- und ölabweisenden Produkten als Textilausrüstungsmittel brauchbar, die es erlauben, Textilfasern hydrophob und oleophob (also wasser-, schmutz- und ölabweisend) auszurüsten.

Von modernen Textilmaterialien, die z.B. als Möbelbezugsstoffe oder als textiler Bodenbelag Verwendung finden, erwartet der Verbraucher günstige Eigenschaften in Hinblick auf ihre mechanische Beanspruchbarkeit, also ihre statische und dynamische Belastbarkeit und eine Unempfindlichkeit gegen Wasser, Öl und/oder Schmutz.

Ein großes Problem bei Textilien mit dreidimensionaler Struktur, die durch Schlingen oder aufgeschnittene Schlingen (= Velours) eine bestimmte Oberflächenstruktur besitzen und einer starken Beanspruchung während des Gebrauchs ausgesetzt sind, ist die Erhaltung der Sauberkeit über einen längeren Zeitraum.

Dazu müssen zwangsläufig entstandene Verschmutzungen leicht und soweit entfernbar sein, daß keine oder nur geringe Rückstände auf dem Material verbleiben, die es optisch nicht oder nur unwesentlich beeinträchtigen.

Schmutzsubstanzen können von z.B. folgender Zusammensetzung und Konsistenz sein; Öl und ölenthaltende Substanzen, flüssige, wäßrige angefärbte Substanzen, anorganische trockene pigmentartige Substanzen (Straßenstaub), wäßrige Suspensionen derselben und Mischungen der genannten Substanzen.

Das Prinzip einer Schutzausrüstung besteht darin, daß durch das Ausrüstungsmittel den Textilien hydrophobe und oleophobe Eigenschaften verliehen werden, die das Einsinken von flüssigen Verschmutzungen verhindern. Trockenschmutz haftet nicht an den Fasern und kann z.B. durch Staubsaugen leicht entfernt werden.

Eine bedeutende Klasse solcher Hydrophobier- und/oder Oleophobiermittel für Textilausrüstungen stellen die hochfluorierten organischen Verbindungen (meist Fluorcarbonharze) dar. Es hat sich nun gezeigt, daß Mittel enthaltend solche fluorierten Hydrophobier-/Oleophobiermittel und erfindungsgemäße blockierte Polyisocyanate den mit diesen Mitteln ausgerüsteten Textilien überraschenderweise eine wünschenswerte Kombination überragender Eigenschaften verleihen, und zwar
(i) eine Hydrophob-/Oleophobausrüstung mit hoher Beständigkeit bei wiederholtem Waschen und Reinigen,
(ii) eine weiter verbesserte Trockenschmutzabweisung und
(iii) eine erleichterte Fleckenauswaschbarkeit ("soil release") und einen verbesserten Schutz gegen "Waschvergrauung" ("soil redeposition"), also gegen den Niederschlag von Schmutz aus der Waschflotte auf das Textil.

Der Begriff "Hydrophob-/Oleophobausrüstung" im Sinne der Erfindung umfaßt die Ausrüstung mit erfindungsgemäßen blockierten Polyisocyanaten und fluorierten organischen Verbindungen unabhängig davon, welche der Eigenschaften (i) bis (iii) im Vordergrund stehen.

Bevorzugte fluorierte organische Verbindungen für die Hydrophob-/Oleophobausrüstung besitzen im allgemeinen Fluorgehalte von 0,2 bis 65, vorzugsweise von 1 bis 35 Gew.-%, wobei das Fluor in Perfluor-C₃-C₂₀-alkylgruppen, die außer Fluoratomen pro 2 C-Atome maximal 1 Wasserstoff- oder Chloratom enthalten, gebunden ist; die Perfluoralkylkette kann durch Sauerstoffatome unterbrochen sein. Die Perfluoralkylgruppen können Bestandteil monomerer oder polymerer Verbindungen sein, die regelmäßig wasserunlöslich sind. Beispiele für derartige Verbindungen umfassen Perfluoralkylgruppen enthaltende Polyacrylate (vergleiche z.B. DE-AS 1 595 017 und 1 595 018, DE-OS 2 939 549, DE-AS 2 134 978, 2 660 200, 1 106 960 und 1 745 089), Perfluoralkylgruppen enthaltende Urethane und Polyurethane (vergleiche z.B. DE-OS 1 468 295, DE-AS 1 794 356, DE-PS 2 702 305, DE-AS 1 795 261, DE-OS 1 956 198), Perfluoralkylgruppen enthaltende Ester aromatischer und aliphatischer Di- und Polycarbonsäuren (vergleiche z.B. DE-OS 3 002 369, EP-A 19 732, DE-OS 3 119 071 und 2 015 332). Bevorzugte fluorierte organische Verbindungen sind (meist handelsübliche) Perfluoralkylpolymerisate aus der Reihe der perfluoralkylgruppenhaltigen Styrol-, Vinyl-, Vinyliden-, Acryl-, Methacryl- und α-Chloracrylpolymerisate. Beispiele für diese Produkte sind Homo- und Copolymerisate folgender Verbindungen:

C₅F₁₁CH₂O₂CC(CH₃)=CH₂

C₇F₁₅CH₂O₂CC(CH₃)=CH₂

C₉F₁₉CH₂O₂CCH=CH₂

C₈F₁₇SO₂N(C₂H₅)C₂H₄O₂CC(CH₃)=CH₂

C₈F₁₇SO₂N(CH₃)C₂H₄O₂CCH=CH₂

C₈F₁₇CON(C₂H₅)C₂H₄O₂CC(CH₃)=CH₂

C₈F₁₇C₂H₄O₂CC(CH₃)=CH₂

C₈F₁₇SO₂N(CH₃)COC(CH₃)=CH₂

C₈F₁₇C₂H₄O₂CCH=CHCO₂C₂H₄C₈H₁₇

C₈F₁₇SO₂N(C₃H₇)C₂H₄OCOCH=CH₂

C₈F₁₇SO₂N(CH₃)C₁₁H₂₂OCOCH=CH₂

C₈F₁₇SO₂N(CH₃)C₁₀H₂₀OCOCH=CH₂

C₈F₁₇SO₂N(CH₃)C₁₁H₂₂OCOC(CH₃)=CH₂

C₅F₁₁CH₂OCOC(CH₃)=CH₂

C₇F₁₅CH₂OCOC(CH₃)=CH₂

C₈F₁₇SO₂N(C₂H₅)C₂H₄COOCH=CH₂

C₇F₁₅C₃H₆COOCH=CH₂

C₄F₉COOCH₂CH=CH₂

C₈F₁₇SO₂N(C₂H₅)COCH=CH₂

C₇F₁₅CH₂O_{C}CH=CHCO₂CH₂C₇F₁₅

C₃F₇CH₂O₂OCF=CH₂

C₃F₇CH₂O₂CCF=CF₂

(C₃F₇)₃CCH₂O₂CCH=CH₂

C₈F₁₇(CH₂)₃O₂CCH=CH₂

C₈F₁₇COCH₂CH₂CH₂O₂CCH=CH₂

C₈F₁₇(CH₂)₁₁O₂CC(CH₃)=CH₂

C₈F₁₇SO₂CH₂CH₂O₂CCH=CH₂

C₈F₁₇SOCH₂CH₂O₂CCH=CH₂

C₈F₁₇CON(C₂H₅)(CH₂)₂O₂CC(CH₃)=CH₂

C₁₂F₂₅SO₂NH(CH₂)₁₁O₂CC(CH₃)=CH₂

C₁₂F₂₅SO₂C₆H₄CH=CH₂

N-Butylperfluoroctansulfonamidoethylacrylat,
N-Ethylperfluoroctansulfonamidoethylmethacrylat,
N-Methylperfluorbutansulfonamidobutylacrylat,
N-Ethylperfluoroctansulfonamidoethyl-α-chloracrylat,
1,1-Dihydroperfluorhexylacrylat,
1,1-Dihydroperfluordecylmethacrylat,
1,1-Dihydroperfluoroctyl-ω-chloracrylat,
3-(Perfluoroctyl)-propylacrylat,
2-(Perfluorheptyl)-ethylmethacrylat,
11-(Perfluoroctyl)-undecylacrylat und
3-(Perfluorheptyl)-propylchloracrylat.

Bevorzugte fluorierte organische Verbindungen sind z.B. Homo- und Copolymerisate mit wiederkehrenden Einheiten der Formel 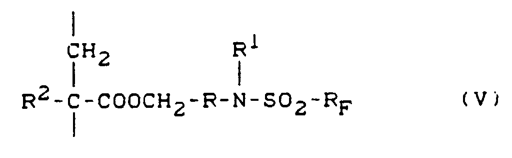 worin
- R: C₁-C₁₂-Alkylen,
- R_{F}: Perfluor-C₄-C₁₂-alkyl,
- R¹: C₁-C₆-Alkyl und
- R²: Wasserstoff oder Methyl bedeuten.

Copolymerisate mit wiederkehrenden Einheiten der Formel V können als weitere Monomere z.B. Styrol, Vinylacetat und/oder Vinylchlorid einpolymerisiert enthalten. Derartige Homo- und Copolymerisate werden beispielsweise in der US-PS 28 03 615 beschrieben.

Weitere bevorzugte fluorierte organische Verbindungen sind z.B. Copolymerisate aus Fluoralkyl(meth)acrylaten und N-Methylol(meth)acrylamid. Derartige Copolymerisate werden beispielsweise in der DE-AS 14 19 505 beschrieben.

Weitere bevorzugte fluorierte organische Verbindungen sind z.B. Copolymerisate aus Perfluoralkylgruppen enthaltenden Monomeren, Hydroxylgruppen enthaltenden Monomeren wie z.B. Hydroxyethyl(meth)acrylat oder Hydroxypropyl(meth)acrylat und gegebenenfalls weiteren polymerisierbaren ethylenisch ungesättigten Monomeren. Derartige Copolymerisate werden beispielsweise in der DE-AS 15 95 017 beschrieben.

Weitere bevorzugte fluorierte organische Verbindungen sind z.B. Copolymerisate aus Fluoralkylgruppen enthaltenden Monomeren, Verbindungen der Formel 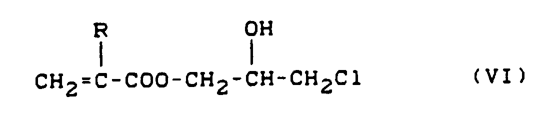 worin R Wasserstoff oder Methyl bedeutet,
und gegebenenfalls weiteren polymerisierbaren ethylenisch ungesättigten Monomeren wie z.B. (Meth)Acrylsäure und ihren Alkylestern (wie Stearyl(meth)acrylat). Derartige Copolymerisate werden beispielsweise in der DE-OS 29 39 549 beschrieben.

Weitere bevorzugte fluorierte organische Verbindungen sind z.B. Perfluoralkylreste enthaltende reaktive Homo- und Copolymerisate, die als reaktive Gruppen Hydroxylgruppen oder C₁-C₃-Alkoxygruppen tragen. Derartige Homo- und Copolymerisate werden beispielsweise in der EP-A 196 309 beschrieben.

Besonders bevorzugte fluorierte organische Verbindungen sind Homo- und Copolymerisate aus Verbindungen der Formeln 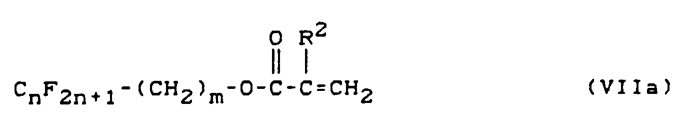 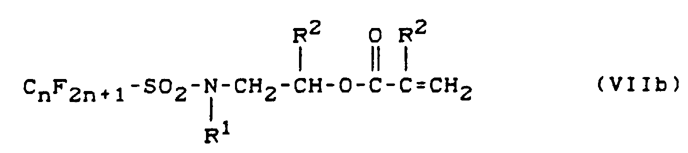 sowie 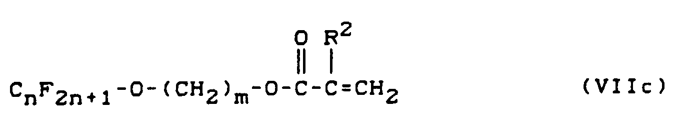 worin
- R¹: C₁-C₄-Alkyl, vorzugsweise C₁-C₂-Alkyl,
- R²: Wasserstoff oder Methyl,
- m: eine ganze Zahl von 1 bis 4, vorzugsweise 2, und
- n: eine ganze Zahl von 4 bis 12, vorzugsweise von 6 bis 8, bedeuten.

Besonders geeignete perfluoralkylgruppenfreie Monomere sind einerseits Verbindungen der Formel 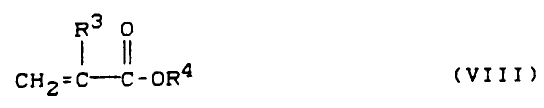 worin
- R³: für Wasserstoff, Methyl oder Fluor, vorzugsweise für Wasserstoff oder Methyl, und
- R⁴: für einen C₈-C₂₂-, vorzugsweise C₁₂-C₂₂-Alkyl- oder -Alkenylrest stehen.

Beispiele solcher polymerisierbaren Monomeren VIII umfassen beispielsweise Acryl- und Methacrylsäureester von Behenylalkohol, Stearylalkohol, Oleylalkohol, Nonyl-und Octylalkohol einschließlich der Isomerengemische solcher Alkohole.

Besonders geeignete perfluoralkylgruppenfreie Monomere sind andererseits Verbindungen der Formeln 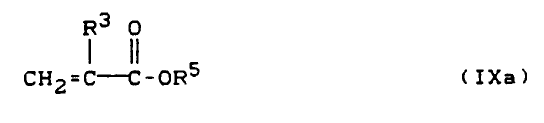 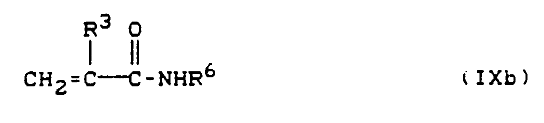 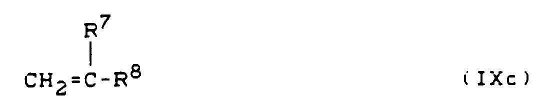 worin
- R³: Wasserstoff, Methyl oder Fluor,
- R⁵: C₁-C₇-Alkyl,
- R⁶: C₁-C₇-Alkyl, 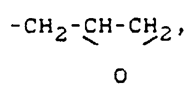 -CH₂-OH, -CH₂-OCH₃ oder 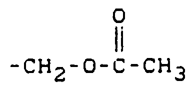
- R⁷: H, CH₃, F oder Cl,
- R⁸: Cl, F, OR¹, Phenyl, 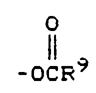 oder CN und
- R⁹: C₁-C₄-Alkyl
bedeuten.

Besonders bevorzugte Monomere (IX) sind Vinylester wie Vinylacetat und Vinylpropionat sowie Acryl- und Methacrylsäureester von C₁-C₄-Alkoholen.

Besonders bevorzugte Copolymerisate dieser Art enthalten copolymerisierte Einheiten der verschiedenen Monomeren in folgenden Mengenverhältnissen:
Perfluoralkylmonomere der Formeln (VII) 15 bis 70, vorzugsweise 25 bis 60 Gew.-%,
Monomere der Formel (VIII) 5 bis 50, vorzugsweise 10 bis 45 Gew.-%,
Monomere der Formel (IX) 15 bis 65, vorzugsweise 20 bis 55 Gew.-%.

Derartige Homo- und Copolymerisate und Verfahren zu ihrer Herstellung werden beispielsweise in den DE-OS 39 35 859 und 40 12 630 beschrieben.

Für die Zwecke der Textilausrüstung können die fluorierten organischen Verbindungen und die erfindungsgemäßen blockierten Polyisocyanate in einem Gewichtsverhältnis von 12:1 bis 1:1, vorzugsweise 6:1 bis 2:1 (jeweils bezogen auf Feststoff) eingesetzt werden.

Die oben unter (i) erwähnte wasch- und reinigungsbeständige Hydrophob-/Oleophobausrüstung ist besonders für Oberbekleidung, Markisen und Textilien allgemeiner Art von Bedeutung.

Die oben unter (ii) erwähnte verbesserte Trockenschmutzabweisung ist besonders für Teppiche wichtig. Nach einer bevorzugten Ausführungsform werden besonders vorteilhafte schmutzabweisende Eigenschaften erhalten, wenn man als fluorierte organische Komponente eine Mischung aus
A) 50 bis 80 Gew.-Teilen einer wäßrigen kolloidalen Suspension von Organosilsesquioxanen aus Einheiten der Formel RSiO₃/₂ (R = gegebenenfalls substituierter Alkyl- beziehungsweise Arylrest mit bis zu 7 Kohlenstoffatomen) und/oder von Cokondensaten aus Hydrolysaten von Tetraalkoxysilanen mit Organotrialkoxysilanen mit RSiO_{3/2}- beziehungsweise SiO₂-Einheiten in Form eines Sols und
B) 20 bis 50 Gew.-Teilen einer wäßrigen Dispersion einsetzt, die ihrerseits 5 bis 65 Gew.-% Fluorgruppenhaltiges Polymer mit einem Fluorgehalt von 0,2 bis 40 Gew.-% aufweist.

Als Komponente A) können Organosilsesquioxane, wie sie z.B. in der DE-AS 1 594 985 oder in der DE-OS 3 004 824 beschrieben sind, eingesetzt werden. Diese werden hergestellt, indem man z.B. Silane der Formel R-Si (OR')₃ alleine oder zusammen mit Silanen (Si(OR')₄, worin R substituierter oder unsubstituierter Kohlenwasserstoffrest mit 1 bis 7 Kohlenstoffatomen, dessen Substituenten Halogenatome, Amino-, Mercapto- und Epoxygruppen sein können und bis zu 95 % der Reste R Methyl sind und R' einen Alkylrest mit 1 bis 4 Kohlenstoffatomen bedeutet, zu einem Gemisch aus Wasser, einer Puffersubstanz, einem oberflächenaktiven Mittel und gegebenenfalls einem organischen Lösungsmittel unter Bewegung und unter sauren oder basischen Bedingungen zugegeben werden.

Durch die gleichzeitige Hydrolyse der Silane entstehen Mischpolymerisate der Silsesquioxane, worin die Einheiten in Blockform oder statistisch verteilt vorliegen können. Die bevorzugte Menge an zugesetztem Silan der Formel Si(OR')₄ beträgt 2 bis 50, vorzugsweise 3 bis 20 Gew.-%, bezogen auf die Gesamtmenge der eingesetzten Silane.

Derartige Mischungen aus A und B zur Textilausrüstung werden beispielsweise in der DE-OS 33 07 420 beschrieben. Auch hier gilt selbstverständlich das oben empfohlene Gewichtsverhältnis von fluorierter organischer Verbindung zu erfindungsgemäßem blockiertem Polyisocyanat von 12:1 bis 1:1, vorzugsweise 6:1 bis 2:1.

Die oben unter (iii) erwähnte Fleckenauswaschbarkeit und der erhöhte Schutz gegen Waschvergrauung ist insbesondere für Tischwäsche, aber auch für Arbeitskleidung wichtig.

Die erfindungsgemäßen blockierten Polyisocyanate werden in Kombination mit wasser- und ölabweisenden Fluorcarbonharzen, wie oben erwähnt, vorzugsweise in Form ihrer wäßrigen Dispersion appliziert.

Selbstverständlich können den Ausrüstungsflotten zur Hydrophob- und Oleophobausrüstung weitere übliche Textilhilfsmittel zugesetzt werden (siehe hierzu Chwala/Anger, "Handbuch der Textilhilfsmittel", Verlag Chemie, Weinheim, 1977 und Rath, "Lehrbuch der Textilchemie", Springer-Verlag, Heidelberg, 1963), beispielsweise
- Knitterfrei- und Weichmachunsmittel, gegebenenfalls mit den dazugehörigen Katalysatoren,
- Flammhemmittel,
- Appreturmittel,
- Hydrophobiermittel auf Basis
   d) Paraffin/Metallsalz-(insbesondere Zirkonsalz)Emulsionen,
   β) Fettsaure/Melamin/Formaldehyd-Kondensat/Paraffin-Mischungen,
   x) Polydimethylsiloxan- und Wasserstoffmethylsiloxan-Emulsionen.

Der Zusatz dieser Textilhilfsmittel erfolgt üblicherweise bei der Herstellung der Ausrüstungsflotten, ist selbstverständlich aber auch als Bestandteil der erfindungsgemäß zu verwendenden Polyisocyanaten oder im Rahmen der Herstellung der fluorierten organischen Verbindungen denkbar.

Die textilen Substrate können in beliebiger Form, z.B. als Filamente, Fasern, Garne, Vliese, Gewebe, Gewirke oder Gestricke vorliegen.

Die fluorierten organischen Verbindungen werden im allgemeinen so appliziert, daß eine Feststoffauflage von 0,5 bis 35 g pro kg ausgerüstetem Textilgut erreicht wird. Bei Synthesefasern mit Einzeltitern über 1,2 dtex pro Filament ist der Auftrag vorzugsweise 0,5 bis 25 g/kg, bei Synthesefasern mit Titern unter 1,2 dtex pro Filament (Mikrofasern) und bei cellulosischen Fasern sowie bei Keratinfasern und Mischungen dieser Fasern untereinander werden vorzugsweise 10 bis 35 g/kg aufgetragen.

Der Auftrag kann in der in der Textilindustrie üblichen Weise durch Pflatschen, Foulardieren, Sprühen, Schaumauftrag oder Ausziehverfahren erfolgen. Diese Verfahren sind dem Fachmann geläufig, in der Literatur beschrieben und bedürfen daher keiner besonderen Erläuterung. Die Dispersion der infragekommenden fluorierten organischen Verbindungen sind auf wäßriger Basis aufgebaut, können aber zur Verbesserung der Dispersionsstabilität oder produktionstechnisch bedingt geringe Mengen organischer Lösungsmittel enthalten.

Zur Vernetzung ist ein Ausheizen der Artikel erforderlich, wobei zunächst das Wasser verdampft und anschließend die Vernetzungsreaktion eintritt. Im allgemeinen erfolgt die Aushärtung im Temperaturbereich von 80 bis 180, vorzugsweise 100 bis 150°C. Es werden so hochwertige, hydrophob und oleophob ausgerüstete textile Materialien mit ausgezeichneter Wasch- und (chem.) Reinigungsbeständigkeit erhalten, die überraschenderweise überragende Nichtwiederanschmutzfähigkeits-Eigenschaften und eine deutlich verbesserte Fleckenauswaschbarkeit aufweisen.

Die Prozentangaben in den nachfolgenden Beispielen sind, soweit nicht anderslautend vermerkt, Gewichtsprozente und beziehen sich auf den Feststoffanteil der Verfahrensprodukte.

### Beispiele

### Ausgangsprodukte:

### Polyether 1

Auf n-Butanol gestarteter, monofunktioneller Ethylenoxid/Propylenoxid-Polyether vom Molekulargewicht 2150. Gehalt an Ethylenoxid-Einheiten: 80 %.

### Polyether 2

Auf 3-Ethyl-3-hydroxymethyloxetan gestarteter monofunktioneller Ethylenoxid-Polyether vom Molekulargewicht 1210.

### Polyether 3:

Bifunktioneller auf Propylenglykol gestarteter Propylenoxid/Ethylenoxid-Polyether vom Molekulargewicht 2000 (mit 25 % eingebauten Ethylenoxideinheiten).

### Polyether 4:

Bifunktioneller auf Propylenglykol gestarteter Propylenoxid/Ethylenoxid-Polyether vom Molekulargewicht 4000 (mit 20 % eingebauten Ethylenoxideinheiten).

### Polyether 5:

Bifunktioneller auf Propylenglykol gestarteter Propylenoxidpolyether vom Molekulargewicht 1000.

### Polyether 6:

Polyethylenglykol vom Molekulargewicht 3400.

### Polyether 7:

Polyethylenglykol vom Molekulargewicht 6000.

### Polyol 8:

Glycerinmonostearat

### Polyether 9:

Bifunktioneller auf Propylenglykol gestarteter Propylenoxidpolyether vom Molekulargewicht 2000.

Alle verwendeten Polyole wurden azeotrop entwässert.

### Polyisocyanat 1

Hergestellt durch Umsetzung von Trimethylolpropan mit überschüssigem Tolylendiisocyanat (Mischung von 2,4- und 2,6-Isomeren im Gew.-Verhältnis 80:20), Abdestillieren des überschüssigen Monomeren und Lösen des Reaktionsproduktes in Essigsäureethylester. NCO-Gehalt: 12,8 %, Festkörpergehalt: 75 %.

### Polyisocyanat 2

Biuretpolyisocyanat auf Basis von 1,6-Diisocyanatohexan, welches im wesentlichen aus N,N',N-''Tris-(6-isocyanatohexyl)-biuret und dessen höheren Homologen besteht, mit einem NCO-Gehalt von 21,0 %, einem Gehalt an monomerem 1,6-Diisocyanatohexan von unter 0,5 %, einer Viskosität bei 28°C von 8500 mPa.s und einer mittleren NCO-Funktionalität von ca. 3,3.

### Polyisocyanat 3

Durch Trimerisierung eines Teils der Isocyanatgruppen von 1,6-Diisocyanatohexan hergestelltes, Isocyanatgruppen aufweisendes Polyisocyanat, welches im wesentlichen aus Tris-(6-isocyanatohexyl)-isocyanurat und dessen höheren Homologen besteht, mit einem NCO-Gehalt von 21,6 %, einem Gehalt an monomeren Diisocyanat von unter 0,3 %, einer Viskosität bei 28°C von 1700 mPa.s und einer mittleren NCO-Funktionalität von ca. 3,3.

### Sulfonatdiol

Propoxyliertes Addukt aus Buten-2-diol-1,4 und Natriumhydrogensulfit vom Molekulargewicht 425, 70%ig gelöst in Toluol.

### Beispiel 1

- 211,2 g: Polyisocyanat 1 werden vorgelegt und bei Raumtemperatur mit
- 64,3 g: Polyether 1 versetzt. Bei einer Raumtemperatur von 22 - 42°C tropft man innerhalb einer Stunde
- 28,3 g: Butanonoxim zu. Anschließend gibt man bei 60° C
- 4,3 mg: p-Toluolsulfonsäuremethylester (gelöst in 10 ml Ethylacetat) und
- 9,1 g: Sulfonatdiol zu. Nach 30 Minuten unter Rühren bei dieser Temperatur werden innerhalb 60 Minuten
- 42,4 g: Butanonoxim zugetropft. Nach 5 Minuten ist laut IR-Spektrum das Prepolymer NCO-negativ. Bei 60 - 65°C wird nun zügig (3-5 Minuten) mit
- 760 ml: entsalztem Wasser dispergiert. Das Lösungsmittel (Toluol/Ethylacetat) wird im Vakuum abdestilliert. Man erhält eine feinteilige Dispersion mit den folgenden Daten
Sulfonat: 0,4 % = 5 meq/100 g Fertigprodukt
Ethylenoxid: 18,0 %
Feststoff: 30,0 %
pH-Wert: 6-7

### Beispiel 2

- 255,2 g: Polyisocyanat 1 werden bei Raumtemperatur mit
- 35,7 g: Polyether 1 und 37 ml Ethylacetat gemischt und 1 Stunde bei 80°C gerührt. Nach Abkühlen auf 60°C werden nacheinander
- 10 mg: p-Toluolsulfonsäuremethylester und
- 11,4 g: Sulfonatdiol zugegeben. Nach 30 Minuten bei 60°C werden innerhalb ca. 30 Minuten
- 64,9 g: Butanonoxim bei 60°C - 70°C zugetropft, anschließend 10 Minuten bei 70°C nachgerührt und mit
- 700 ml: entsalztem Wasser dispergiert. Man erhält nach Abdestillieren des organischen Lösungemittels eine feinteilige stabile Dispersion.
Daten:
Sulfonat: 0,5 % = 6,25 meq/100 g Fertigprodukt
Feststoff: 30,0 %
pH-Wert: 6-7

### Beispiel 3

Man arbeitet analog Beispiel 2 unter Verwendung folgender Mengen:
- 261,6 g: Polyisocyanat 1
- 28,6 g: Polyether 1
- 9,1 g: Sulfonatdiol
- 68,8 g: Butanonoxim
- 10 mg: p-Toluolsulfonsäuremethylester
- 700 ml: entsalztes Wasser
Daten:
Sulfonat: 0,4 % = 5 meq/100 g Fertigprodukt
Ethylenoxid: 9,0 %
Feststoff: 30,0 %
pH-Wert: 6-7

### Beispiel 4

- 129 g: Polyisocyanat 2,
- 20 g: Polyether 1 und
- 6,4 g: Sulfonatdiol werden bei Raumtemperatur vorgelegt und 1 Stunde bei 95°C gerührt. In der Abkühlphase wird bei 90°C mit 1 Tropfen Zinn-II-octoat katalysiert. Bei 70°C wird mit
- 56,5 g: Butanonoxim ca. 30 Minuten ungesetzt und nach 10 Minuten Nachrühren mit
- 490 ml: entsalztem Wasser dispergiert und 1 Stunde nachgerührt. Man erhält eine feinteilige Dispersion.
Daten:
Sulfonat: 0,4 % = 5 meq/100 g Fertigprodukt
Ethylenoxid: 8,0 %
Feststoff: 30,0 %
pH-Wert: 6-7

### Beispiel 5

- 178 g: Polyisocyanat 3,
- 35,7 g: Polyether 1 und
- 9,1 g: Sulfonatdiol werden bei Raumtemperatur vorgelegt und 1 Stunde bei 95°C gerührt. In der Abkühlphase wird bei 90°C mit 1 Tropfen Zinn-II-octoat katalysiert. Bei 70°C wird mit
- 79,2 g: Butanonoxim ca. 30 Minuten umgesetzt und nach 10 Minuten Nachrühren mit
- 700 ml: entsalztem Wasser dispergiert und 1 Stunde nachgerührt. Man erhält eine stabile Dispersion.
Daten:
Sulfonat: 0,4 % = 5 meq/100 g Fertigprodukt
Ethylenoxid: 10,0 %
Feststoff: 30,0 %
pH-Wert: 6-7

### Beispiel 6

- 253,3 g: Polyisocyanat 1 werden bei Raumtemperatur mit
- 39,8 g: Polyether 2 und 37 ml Ethylacetat gemischt und 1 Stunde bei 80°C gerührt. Nach Abkühlen auf 60°C werden nacheinander
- 10,0 mg: p-Toluolsulfonsäuremethylester und
- 6,9 g: Sulfonatdiol zugegeben. Nach 30 Minuten bei 60°C werden innerhalb 30 Minuten
- 65,4 g: Butanonoxim bei 60°C-70°C zugetropft, anschließend 10 Minuten bei 70°C nachgerührt und mit
- 1100 ml: entsalztem Wasser dispergiert. Man erhält nach Abdestillieren des organischen Lösungsmittels eine stabile Dispersion.
Daten:
Sulfonat: 0,3 % = 3,75 meq/100 g Fertigprodukt
Feststoff: 27,0 %
pH-Wert: 6-7

### Beispiel 7

- 241,1 g: Polyisocyanat 1 werden bei Raumtemperatur mit
- 53,6 g: Polyether 1 und 44 ml Ethylacetat gemischt und 1 Stunde bei 80°C gerührt. Nach Abkühlen auf 70°C versetzt man mit
- 4,8 g: Dimethylolpropionsäure. Nach 45 Minuten bei 70°C wird mit
- 3,44 g: Triethylamin versetzt und innerhalb ca. 15 Minuten
- 57,4 g: Butanonoxim bei 70°C zugetropft, anschließend 5 Minuten bei 70°C nachgerührt und mit
- 700 ml: entsalztem Wasser dispergiert. Man erhält nach Abdestillieren des organischen Lösungsmittels eine stabile Dispersion.
Daten:
Carboxylat: 0,5 % = 11,4 meq/100 g Fertigprodukt
Ethylenoxid: 15,0 %
Feststoff: 30,0 %
pH-Wert: 6-7

### Beispiel 8

- 176,1 g: Polyisocyanat 2 werden bei Raumtemperatur mit
- 42,9 g: Polyether 1 und
- 4,8 g: Dimethylolpropionsäure gemischt und 1 Stunde bei 80°C gerührt. Nach Abkühlen auf 90°C versetzt man mit 1 Tropfen Zinn-II-octoat. Nach Abkühlen auf 65°C wird mit
- 3,44 g: Triethylamin versetzt und innerhalb ca. 30 Minuten
- 72,8 g: Butanonoxim bei 70°C zugetropft, anschließend 5 Minuten bei 70°C nachgerührt und mit
- 700 ml: entsalztem Wasser dispergiert. Man erhält eine feinteilige stabile Dispersion.
Daten:
Carboxylat: 0,5 % 11,4 meq/100 g Fertigprodukt
Ethylenoxid: 12,0 %
Feststoff: 30,0 %
pH-Wert: 6-7

### Beispiel 9

- 176 g: Polyisocyanat 2 werden bei Raumtemperatur mit
- 43 g: Polyether 1 gemischt und 1 Stunde bei 100°C gerührt. Nach Abkühlen auf 70°C versetzt man mit
- 2,4 g: N-Methyldiethanolamin und nach 1 Stunde wird in 30 Minuten
- 76,1 g: Butanonoxim bei 70°C zugetropft, anschließend 15 Minuten bei 70°C nachgerührt und mit
- 20 ml: einer 1n Perchlorsäure in
- 80 g: Wasser versetzt. Nach 10 Minuten wird mit
- 600 ml: entsalztem Wasser dispergiert. Man erhält eine feinteilige stabile Dispersion.
Daten:
N^{⊕} : 9,4 meq/100 g Fertigprodukt
Ethylenoxid : 11,6 %
Feststoff : 30,0 %
pH-Wert : 3,9

### Beispiel 10

Man verfährt analog Beispiel 9, setzt aber nach der Reaktion mit Butanonoxim mit
- 2,3 g: (18mMol) Dimethylsulfat um. Nach 1 Stunde Reaktionszeit bei 65°C wird mit
- 700 g: Wasser dispergiert. Das lösungsmittelfrei hergestellte Produkt ist ein lagerstabile, feinteilige Dispersion.
Daten:
N^{⊕} : 8,4 meq/100 g Fertigprodukt
Ethylenoxid : 11,4 %
Feststoff : 30,0 %
pH-Wert : 5,2

### Beispiel 11

Beispiel 10 wird wiederholt. Man verwendet jedoch statt Dimethylsulfat
- 2 g: Benzylchlorid. Das stabile Endprodukt hat eine etwas größere mittlere Teilchengröße. Bei sonst gleichen Daten beträgt der Gehalt an N^{⊕} jetzt 7,3 meq/100 g Fertigprodukt.

### Vergleichsbeispiel 1

Man verwendet die gleichen Einsatzmengen wie in Beispiel 2, verfährt aber folgendermaßen:
Polyisocyanat 1 wird auf 50°C erwärmt und innerhalb 30 Minuten mit Butanonoxim blockiert, wobei die Temperatur auf 67°C ansteigt. Nach Abkühlen auf 60°C werden nacheinander Polyether 1, p-Toluolsulfonsäuremethylester und Sulfonatdiol zugegeben. Nach 2 Stunden Rühren bei 70°C ist im IR-Spektrum kein NCO-Gehalt mehr nachzuweisen. Anschließend wird mit entsalztem Wasser dispergiert. Man erhält nach Abdestillieren des organischen Lösungsmittels eine grobe, sofort sedimentierende Suspension, die erbsengroße Partikel enthält.

### Daten: (theoretisch)

Sulfonat: 0,5 % = 6,25 meq/100 g Fertigprodukt
Ethylenoxid: 10,0 %
pH-Wert: 6-7 (Serum).

Das Material ist für eine erfindungsgemäße Verwendung absolut ungeeignet. Wegen der Wichtigkeit wurde dieser Vergleichsversuch am nächsten Tag von einer anderen Person wiederholt. Das Ergebnis war identisch (schlecht). Das Vergleichsbeispiel zeigt deutlich, daß nur die erfindungsgemäße Reihenfolge der Verfahrensschritte lagerstabile Dispersionen ergibt.

### Vergleichsbeispiel 2

Das Beispiel 8 der DE-OS 2 456 469 wurde nachgearbeitet. Man erhielt eine feinteilige Dispersion.

### Daten:

Sulfonat: 2,1 % = 26,3 meq/100 g Fertigprodukt
Feststoff: 33,0 %
pH-Wert: 7-8

### Beispiel 12

300 g (1,57 Mol) Polyisocyanat 3 werden bei Raumtemperatur mit 200 g (0,09 Mol) Polyether 1 und 13,1 g (0,1 Mol) Hydroxiethylmorpholin versetzt. Die Mischung wird unter Rühren auf 105°C erwärmt und 2 Stunden bei dieser Temperatur gehalten. Nach Abkühlen auf 60°C wird der NCO-Gehalt bestimmt (theor. 11,3 % / gef. 11,0 %) und dann wird mit 10 g Dimethylsulfat versetzt. Nach 30 Minuten bei 60°C wird mit 394 g (1,474 Mol) wäßriger 39%iger Natriumhydrogensulfitlösung versetzt, 10 Minuten nachgerührt und anschließend innerhalb ca. 5 Minuten mit 1315 ml entsalztem Wasser dispergiert. Die so erhaltene Dispersion wird 7 Stunden bei 40°C nachgerührt und anschließend bei Raumtemperatur entgast. Man erhält eine feinteilige Dispersion mit einem Feststoffgehalt von 30 %, dem pH-Wert 5,9 und einem Gehalt an quartärem Stickstoff von 15,6 meq/100 g Fertigprodukt.

### Beispiel 13

300 g (1,57 Mol) Polyisocyanat 3 werden bei Raumtemperatur mit 200 g (0,09 Mol) Polyether 1 und 14,3 g (0,1 Mol) Hydroxpropylmorpholin versetzt. Die Mischung wird unter Rühren auf 105°C erwärmt und 2 Stunden bei dieser Temperatur gehalten. Nach Abkühlen auf 60°C wird der NCO-Gehalt bestimmt (theor. 11,1 % / gef. 10,8 %), und dann wird mit 10 g Dimethylsulfat versetzt. Nach 30 Minuten bei 60°C wird mit 397,3 g (1,490 Mol) 39%iger wäßriger Natriumhydrogensulfitlösung versetzt, 10 Minuten nachgerührt und anschließend innerhalb ca. 5 Minuten mit 1318 ml entsalztem Wasser dispergiert. Die so erhaltene Dispersion wird 7 Stunden bei 40°C nachgerührt und anschließend bei Raumtemperatur entgast. Man erhält eine feinteilige Dispersion mit einem Feststoffgehalt von 30 %, dem pH-Wert 5,9 und einem Gehalt an quartärem Stickstoff von 15,55 meq/100 g Fertigprodukt.

### Beispiel 14

Man wiederholt Beispiel 12, verwendet jedoch nur 6,6 g Oxyethylmorpholin und 5 g Dimethylsulfat. Nach Zusatz von 410 g 39%iger wäßriger Natriumbisulfitlösung und 1305 g Wasser erhält man das gewünschte Produkt. Es enthält nunmehr 7,9 meq quartären Stickstoff pro 100 g Fertigprodukt bei einem Festkörpergehalt von 30 %.

### Beispiel 15

Man wiederholt Beispiel 13, verwendet jedoch nur 7,1 g Oxypropylmorpholin und 5 g Dimethylsulfat. Nach Zusatz von 411 g 39%iger wäßriger Natriumbisulfitlösung und 1306 g Wasser erhält man das gewünschte Produkt. Es enthält nunmehr 7,9 meq quartären Stickstoff pro 100 g Fertigprodukt bei einem Festkörpergehalt von 30 %.

### Beispiel 16

300 g (1,51 Mol) Polyisocyanat 3 werden bei Raumtemperatur mit 150 g (0,07 Mol) Polyether 1 und 50 g (0,025 Mol) Polyether 9 versetzt. Die Mischung wird unter Rühren auf 105°C erwärmt und 2 Stunden bei dieser Temperatur gehalten. Nach Abkühlen auf 60°C wird der NCO-Gehalt bestimmt (theor. 12,0 % / gef. 11,6 %). Bei 60°C wird das erhaltene Prepolymer mit 373,0 g (1.434 Mol) 40%iger wäßriger Natriumhydrogensulfitlösung versetzt, 10 Minuten nachgerührt und anschließend innerhalb ca. 5 Minuten mit 1290 ml entsalztem Wasser dispergiert. Die so erhaltene Dispersion wird 7 Stunden bei 40°C nachgerührt und anschließend bei Raumtemperatur entgast. Man erhält eine feinteilige Dispersion mit einem Feststoffgehalt von 30 % und dem pH-Wert 6.

### Beispiel 17

Man arbeitet analog Beispiel 16, katalysiert jedoch mit 1 Tropfen Dibutylzinndilaurat (NCO-Gehalt gef. 11,2 %). Man erhält ebenfalls eine feinteilige lagerstabile Dispersion mit 30 % Feststoff und pH 6.

### Beispiele 18 - 23

Die Beispiele 18 - 23 werden analog Beispiel 16 durchgeführt. Die Polyether 3 - 8 (je 50 g) wurden anstatt Polyether 9 eingesetzt.

| Beisp. | Polyether | ber. %NCO | gef. %NCO | pH-Wert | Bemerkung |
|---|---|---|---|---|---|
| 18 | 3 | 12,0 | 11,7 | 6 | feinteilig/stabil |
| 19 | 4 | 12,2 | 12,2 | 6 | feinteilig/stabil |
| 20 | 5 | 11,6 | 11,2 | 6 | feinteilig/stabil |
| 21 | 6 | 12,2 | 12,1 | 6 | feinteilig/stabil |
| 22 | 7 | 12,3 | 11,8 | 6 | feinteilig/stabil |
| 23 | 8 | 11,0 | 10,4 | 6 | feinteilig/stabil |

### Beispiel 24

300 g (1,51 Mol) Polyisocyanat 3 werden bei Raumtemperatur mit 200 g (0,093 Mol) Polyether 1 versetzt. Die Mischung wird unter Rühren auf 105°C erwärmt und 2 Stunden bei dieser Temperatur gehalten. Nach Abkühlen auf 60°C wird der NCO-Gehalt bestimmt (theor. 12,0 % / gef. 11,9 %). Bei 60°C wird das erhaltene Prepolymer mit 295,5 g (1,138 Mol) 40%iger wäßriger Natriumhydrogensulfitlösung versetzt, 10 Minuten nachgerührt und anschließend innerhalb ca. 5 Minuten mit 1265 ml entsalztem Wasser dispergiert. Die so erhaltene Dispersion wird 7 Stunden bei 40°C nachgerührt und anschließend bei Raumtemperatur entgast. Man erhält eine feinteilige Dispersion mit einem Feststoffgehalt von 30 % und dem pHWert 6.

### Beispiele 25 - 27

Man arbeitet analog Beispiel 24, verwendet aber abweichende Mengen an Polyether 1.

| Beisp. | g Polyether 1 | %NCO (ber.) | %NCO (gef.) | pH |
|---|---|---|---|---|
| 25 | 100 | 15,3 | 15,1 | 5,7 |
| 26 | 150 | 13,7 | 13,4 | 5,9 |
| 27 | 300 | 9,6 | 9,4 | 6,0 |

### Beispiel 28

300 g (1,51 Mol) Polyisocyanat 3 werden bei Raumtemperatur mit 200 g (0,093 Mol) Polyether 1 versetzt. Die Mischung wird unter Rühren auf 105°C erwärmt und 2 Stunden bei dieser Temperatur gehalten. Nach Abkühlen auf 60°C wird der NCO-Gehalt bestimmt (theor. 12,0 % / gef. 11,9 %). Das Prepolymer wird unter kräftigem Rühren in eine Lösung aus 287,5 g (1,106 Mol) 40%iger wäßriger Natriumhydrogensulfitlösung und 1233 ml entsalztem Wasser dispergiert. Nach 12 Stunden Nachrühren bei 40°C und anschließendem Entgasen bei Raumtemperatur erhält man eine feinteilige, niedrigviskose Dispersion mit 30 % Feststoffgehalt und pH 5,9.

### Beispiel 29

300 g (1,51 Mol) Polyisocyanat 2 werden bei Raumtemperatur mit 75 g (0,035 Mol) Polyether 1 versetzt und auf 100°C erwärmt. Nach 1 Stunde Rühren bei dieser Temperatur werden 45 g (0,5 Mol) Glykolmonoethylether langsam zugetropft. Anschließend wird 1 Stunde bei 90 - 100°C gerührt und dann der NCO-Gehalt bestimmt (ber. 9,8 / gef. 9,7). Nach Abkühlen auf 50°C gibt man 520 g (1,0 Mol) 20%ige wäßrige Natriumhydrogensulfitlösung zu, rührt 1 Stunde bei ca. 40°C und dispergiert mit 807 ml entsalztem Wasser. Man erhält nach 5 Stunden Nachrühren bei Raumtemperatur eine stabile Dispersion mit 30 % Feststoffgehalt und pH 5,3.

### Beispiel 30

Man arbeitet analog Beispiel 29, jedoch mit den folgenden Einsatzmengen:
- 300 g (1,51 Mol): Polyisocyanat 2,
- 150 g (0,07 Mol): Polyether 1,
- 21,4 g (0,24 Mol): Glykolmonoethylether,
- 613,8 g (1,18 Mol): 20%ige wäßrige Natriumhydrogensulfitlösung und
- 889 ml: entsalztem Wasser.

Man erhält eine feinteilige Dispersion mit 30 % Feststoffgehalt und pH 6.

### Prepolymerisat 31

Zu 1200 g (2,380 Mol) Polyisocyanat 3 gibt man unter Rühren bei Raumtemperatur 800 g (0,372 Mol) Polyether 1 und erwärmt auf 100°C. Nach einer Reaktionszeit von 1 Stunde bei 100 - 105°C wird der NCO-Gehalt bestimmt (gefunden 12,2 % / theoretisch 12,5 %).

### Beispiel 32

450 g des Prepolymerisats 31 werden bei 40°C mit 1118 ml entsalztem Wasser unter guter Rührung zügig (ca. 2 Minuten) dispergiert. Nach 15 Minuten wird die Dispersion mit 293,2 g (1,043 Mol) einer 37%igen wäßrigen Natriumhydrogensulfitlösung, das heißt 80 % der theoretisch benötigten Menge versetzt. Das Reaktionsgemisch wird 20 Stunden bei 40°C nachgerührt. Man erhält eine feinteilige, lagerstabile Dispersion mit den folgenden Daten: 14,9 % Sulfonatgruppen; 26,5 % eingebaute Ethylenoxidgruppen; 30 % Feststoffgehalt; pH-Wert 6,7.

### Beispiel 33

Man verfährt analog Beispiel 32, verwendet jedoch die folgenden Einsatzmengen:
- 450 g: Prepolymerisat 31,
- 1084 ml: entsalztes Wasser und
- 146,6 g: (0,522 Mol) 37%ige wäßrige Natriumhydrogensulfitlösung (d.h. 40 % der theor. benötigten Menge).

Wie in Beispiel 32 erhält man eine feinteilige Dispersion mit den folgenden Daten:

8,2 % Sulfonatgruppen; 29,0 % eingebaute Ethylenoxidgruppen; 30 % Feststoffgehalt; pH-Wert 7,7.

### Beispiele 34 - 36

Man verfährt analog Beispiel 32:

| Bsp. | %NaHSO₃ | %Eox | %SO₃ | %FK | pH-Wert | Bemerkung |
|---|---|---|---|---|---|---|
| 34 | 60 | 27,4 | 11,6 | 30 | 7,5 | feinteilig/stabil |
| 35 | 20 | 30,8 | 4,4 | 30 | 7,4 | feinteilig/stabil |
| 36 | 100 | 26,1 | 17,4 | 30 | 5,9 | feinteilig/stabil |

### Anwendung

### Anwendungsbeispiel 1 (Waschpermanenz)

Gewebe in Leinwandbindung aus PES/CO-Mischgarn (67/33) von ca. 160 g/m² wird mit nachstehenden Flotten imprägniert, auf dem Foulard bis auf ca. 70 % Flottenaufnahme abgequetscht, anschließend bei 80°C getrocknet und danach 5 Minuten bei 150°C kondensiert.

### Aufgebracht wurden folgende Imprägnierflotten:

### 1.1 (Stand der Technik)

- 50 g/l: 40%ige wässrige Dimethylolethylenharnstofflösung (DMEU),
- 60 g/l: einer Dispersion eines Perfluoralkylketten enthaltenden Acrylat-Copolymerisats mit einem F-Gehalt von ca. 40 % (bezogen auf Feststoff) und ca. 12 % Feststoff (bezogen auf die Gesamtdispersion) ®BAYGARD AFE, Bayer AG) und
- 3 g/l: Zinknitrat als Katalysator für den Dimethylolethylenharnstoff (DMEU)

### 1.2 (erfindungsgemäß)

- 50 g/l: 40%ige wässrige Dimethylolethylenharnstofflösung (DMEU),
- 60 g/l: einer Dispersion eines Perfluoralkylketten enthaltenden Acrylat-Copolymerisats mit einem F-Gehalt von ca. 40 % (bezogen auf Feststoff) und ca. 12 % Feststoff (bezogen auf die Gesamtdispersion) ®BAYGARD AFE, Bayer AG) und
- 3 g/l: Zinknitrat als Katalysator für den Dimethylolethylenharnstoff (DMEU)
- 15 g/l: der im Beispiel 2 beschriebenen Dispersion.

### 1.3 (Vergleich)

- 50 g/l: 40%ige wässrige Dimethylolethylenharnstofflösung (DMEU),
- 60 g/l: einer Dispersion eines Perfluoralkylketten enthaltenden Acrylat-Copolymerisats mit einem F-Gehalt von ca. 40 % (bezogen auf Feststoff) und ca. 12 % Feststoff (bezogen auf die Gesamtdispersion) ®BAYGARD AFE, Bayer AG) und
- 3 g/l: Zinknitrat als Katalysator für den Dimethylolethylenharnstoff (DMEU)
- 15 g/l: der im Vergleichsbeispiel 2 beschriebenen Dispersionen.

Die Prüfung der ausgerüsteten Ware erfolgt nach folgender Methode:
A. - Beregnungsprüfung nach Bundesmann DIN 53888
B. - Ölabweisungstest nach AATCC 118-1978
3. - Spray-Test nach AATCC 22-1974

Die Prüfung ergab folgende Werte:

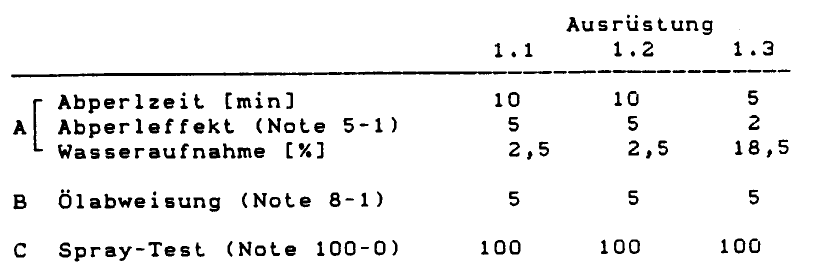

Die so ausgerüsteten Gewebe wurden anschließend 5 mal bei 40°C in einer Haushaltswaschmaschine unter Zusatz eines haushaltsüblichen Feinwaschmittels gewaschen und nach jedem Waschzyklus bei Raumtemperatur getrocknet.

Danach erfolgte die Bewertung nach dem unter B aufgeführten Ölabweisungstest und dem unter C genannten Spray-Test.

| | Ausrüstung | | |
|---|---|---|---|
| | 1.1 | 1.2 | 1.3 |
| B Ölabweisung (Note 8-1) | 3 | 4 | 2 |
| C Spray-Test (Note 100-0) | 50 | 100 | 0 |

### Anwendungsbeispiel 2 (Waschpermanenz/Synthesefasern)

Gewebe in Köperbindung aus 100 % PES-Filamentgarnen mit einem Einzeltiter der Filamente von ca. 4 dtex mit einem Gewicht von 190 g/m² wird mit folgenden Flotten imprägniert, auf ca. 58 % Flottenaufnahme abgequetscht, bei 100°C getrocknet und 60 sec. bei 180°C kondensiert.

Aufgebracht wurden folgende Imprägnierflotten:

### 2.1 (erfindungsgemäß)

- 20 g/l: Isopropanol,
- 1 g/l: Essigsäure 60%ig,
- 80 g/l: einer Dispersion eines Perfluoralkylketten enthaltenden Acrylat-Copolymerisats mit einem F-Gehalt von ca. 40 % (bezogen auf Feststoff) und ca. 16 % Feststoff (bezogen auf die Gesamtdispersion) ®BAYGARD CA 40135, Bayer AG),
- 15 g/l: der im Beispiel 2 beschriebenen Dispersion.

### 2.2 (Vergleich)

- 20 g/l: Isopropanol,
- 1 g/l: Essigsäure 60%ig,
- 80 g/l: einer Dispersion eines Perfluoralkylketten enthaltenden Acrylat-Copolymerisats mit einem F-Gehalt von ca. 40 % (bezogen auf Feststoff) und ca. 16 % Feststoff (bezogen auf die Gesamtdispersion) ®BAYGARD CA 40135, Bayer AG),
- 10 g/l: einer wässrigen, kationisch modifizierten PU-Dispersion gemäß DE-OS 3 523 856 (Beispiel 1)
- 3 g/l: einer 50%igen wässrigen Lösung eines Melamin/Formaldehyd-Kondensates,
- 1 g/l: Zinknitrat als Katalysator für das Melamin/Formaldehyd-Kondensat.

### 2.3 (Stand der Technik)

- 20 g/l: Isopropanol,
- 1 g/l: Essigsäure 60%ig,
- 80 g/l: einer Dispersion eines Perfluoralkylketten enthaltenden Acrylat-Copolymerisats mit einem F-Gehalt von ca. 40 % (bezogen auf Feststoff) und ca. 16 % Feststoff (bezogen auf die Gesamtdispersion) ®BAYGARD CA 40135, Bayer AG),
- 3 g/l: einer 50%igen wässrigen Lösung eines Melamin/Formaldehyd-Kondensates,
- 1 g/l: Zinknitrat als Katalysator für das Melamin/Formaldehyd-Kondensat.

Im Originalzustand waren die Gewebe mit den unterschiedlichen Ausrüstungen gut hydro- und oleophobiert. Es wurden keine Unterschiede in der Wasser- und Ölabweisung nach den o.a. Testmethoden gefunden (Spray-Test Note 100 und Öl-Note 5-6).

Die Gewebe wurden daraufhin in einer Haushaltswaschmaschine unter Zusatz eines haushaltsüblichen Feinwaschmittels bei 40°C gewaschen und nach jedem Waschzyklus bei ca. 70°C maschinell getrocknet (Tumbler).

Während das mit der Flotte 2.1 behandelte Gewebe noch nach 20 Waschzyklen eine Spray-Test-Note von 100 und eine Öl-Note von 4 aufwies, waren die Werte bei dem mit der Flotte 2.2 behandelten Gewebe nach 13 Waschzyklen in der Spray-Test-Note auf 90 und in der Öl-Note auf 2 abgefallen. Das mit der Flotte 2.3 (ohne permanenzverbessernden Zusatz) ausgerüstete Gewebe fiel nach 8 Waschzyklen auf Spray-Test-Note 80 und Öl-Note 2 ab.

### Anwendungsbeispiel 3 (Waschpermanenz)

Gewebe in Leinwandbindung aus PES/CO-Mischgarn (67/33) von ca. 160 g/m² wird mit nachstehenden Flotten imprägniert, auf dem Foulard auf ca. 70 % Flottenaufnahme abgequetscht, anschließend bei 110°C getrocknet und danach 5 Minuten bei 150°C kondensiert.

Aufgebracht wurden folgende Imprägnierflotten:

### 3.1 (Vergleich)

- 40 g/l: 40%ige wässrige Dimethylolethylenharnstofflösung (DMEU),
- 50 g/l: einer Dispersion eines Perfluoralkylketten enthaltenden Acrylat-Copolymerisats mit einem F-Gehalt von ca. 40 % (bezogen auf Feststoff) und ca. 20 % Feststoff (bezogen auf die Gesamtdispersion). Das Copolymerisats enthält keine zur Reaktion befähigten OH-oder OR-Gruppen.
- 3 g/l: Zinknitrat als Katalysator für den Dimethylolethylenharnstoff (DMEU)

### 3.2 (erfindungsgemäß)

- 40 g/l: 40%ige wässrige Dimethylolethylenharnstofflösung (DMEU),
- 50 g/l: einer Dispersion eines Perfluoralkylketten enthaltenden Acrylat-Copolymerisats mit einem F-Gehalt von ca. 40 % (bezogen auf Feststoff) und ca. 20 % Feststoff (bezogen auf die Gesamtdispersion). Das Copolymerisats enthält keine zur Reaktion befähigen OH-oder OR-Gruppen.
- 15 g/l: der im Beispiel 2 beschriebenen Dispersion.
- 3 g/l: Zinknitrat als Katalysator für den Dimethlethylenharnstoff (DMEU)

Die behandelten Gewebe wurden im Originalzustand als auch nach mehrfacher Wäsche bewertet.

Die Gewebe wurden für die Bewertung der Mehrfachwäsche in einer Haushaltswaschmaschine unter Zusatz eines haushaltsüblichen Feinwaschmittels bei 40°C gewaschen und nach jedem Waschzyklus bei ca. 70°C maschinell getrocknet. Die Werte sind in der folgenden Tabelle zusammengefasst:

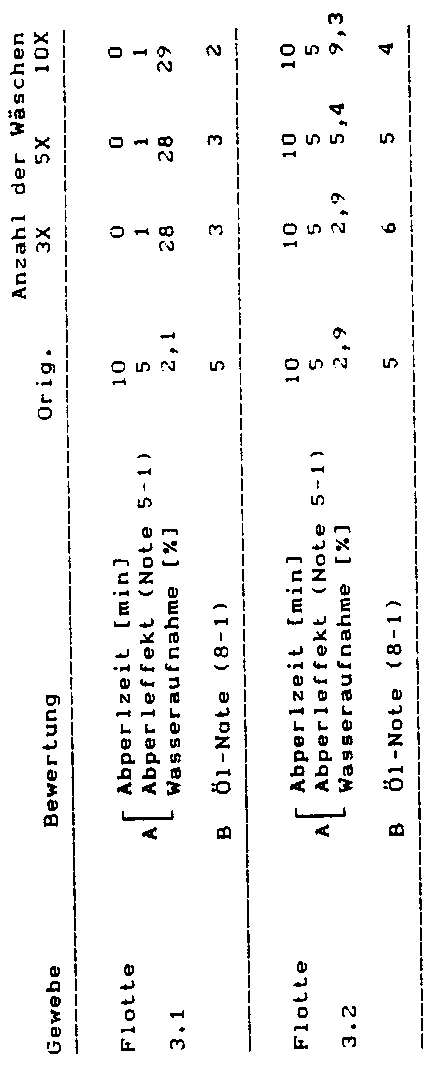

### Anwendungsbeispiel 4 (Wiederanschmutzung)

PES/CO-Köper (60/40) mit einem Gewicht von ca. 240 g/m², gebleicht und weißgetönt, wird mit folgenden Imprägnierflotten imprägniert, im Foulard auf eine Flottenaufnahme von 60 % abgequetscht, anschließend bei 110°C getrocknet und danach bei 150°C 5 Minuten kondensiert.

Die für die leichtere Schmutzauswaschbarkeit (Soil Release) geeignete Ausrüstung wird wie folgt geprüft:

Der Prüfling von 20 x 20 cm wird mit 5 ml eine Lanolin/Ruß-Mischung befleckt und unter einer Glasplatte mit 2,5 kg 1 Minute belastet. Nach einer Stunde wird der nicht aufgesaugte Teil mit einem Papiertuch entfernt. Nach einer Einwirkzeit von 24 Stunden wird der Prüfling bei 60°C mit einem perborathaltigen Haushaltswaschmittel gewaschen. Der verbliebene Fleck wird visuell in Anlehnung an die Bewertung mit dem Graumaßstab DIN 54002 für das Anbluten bewertet. Die Lanolin/Ruß-Mischung besteht aus 50 g Lanolin DAB 6, 10 g Farbruß FW 1 (Degussa), 0,2 g Ceresrot 4 B, 500 ml Perchlorethylen.

Die Wiederanschmutzung (Soil redeposition) prüft man wie folgt:

0,5 g Ruß CK 3 (Degussa) werden mit 2,0 g ®Dixan (Henkel) vermischt und mit heißem Wasser angeschlemmt. Diese Mischung bleibt 4 - 5 Stunden stehen. Anschließend wird mit Wasser auf 1 l aufgefüllt, mit einem Schnellrührer 5 Minuten gerührt und auf 60°C erhitzt. Der Prüfling wird in das Schmutzbad eingelegt und 15 Minuten bei konstanter Temperatur darin bewegt (Flottenverhältnis 1:50). Danach wird 5 Minuten unter fließendem, kalten Wasser gespült und getrocknet. Die Beurteilung der Wiederanschmutzung erfolgt in Anlehnung an die Bewertung mit dem Graumaßstab DIN 54002 für das Anbluten.

Aufgebracht wurden folgende Imprägnierflotten:

### 4.1 (erfindungsgemäß)

- 60 g/l: 40%ige wässrige Dimethylolethylenharnstofflösung (DMEU),
- 60 g/l: einer Dispersion eines Perfluoralkylketten enthaltenden Acrylat-Copolymerisats mit einem F-Gehalt von ca. 60 % (bezogen auf Feststoff) und ca. 30 % Feststoff (bezogen auf die Gesamtdispersion). Das Copolymerisat enthält Polyethylenoxidmethacrylat mit reaktionsfähigen OH-Gruppen, wie sie in EP-A 312 964, Beispiel 3, beschrieben sind,
- 15 g/l: der im Beispiel 2 beschriebenen Dispersion,
- 6 g/l: Zinknitrat als Katalysator für den Dimethylolethylenharnstoff (DMEU).

### 4.2 (Stand der Technik)

- 60 g/l: 40 wässrige Dimethylolethylenharnstofflösung (DMEU),
- 60 g/l: einer Dispersion eines Perfluoralkylketten enthaltenden Acrylat-Copolymerisats mit einem F-Gehalt von ca. 60 % (bezogen auf Feststoff) und ca. 30 % Feststoff (bezogen auf die Gesamtdispersion). Das Copolymerisat enthält Polyethylenoxidmethacrylat mit reaktionsfähigen OH-Gruppen, wie in EP-A 312 964, Beispiel 3, beschrieben sind
- 6 g/l: Zinknitrat als Katalysator für den Dimethylolethylenharnstoff (DMEU)

Das mit der Flotte 4.1 ausgerüstete und 1 mal gewaschenen Gewebe wurde im Wiederanschmutztest mit der Note 4-5 bewertet; demgegenüber war die Bewertung für das mit der Imprägnierflotte 4.2 ausgerüstete Gewebe 3, wobei die Note 5 eine nicht wahrnehmbare Anschmutzung Note 1 hingegen ein starkes Vergrauen durch die Anschmutzung bedeutet.

### Anwendungsbeispiel 5 (Teppichtrockenanschmutzung)

Ein aus Polyamid-6.6 getufteter Teppich mit einem Gewicht von ca. 600 g/m² mit Polypropylen als Trägermaterial, wird in Anlehnung an DE-OS 3 307 420 mit einer Lösung besprüht, die folgende Zusammensetzung hat:
- 110 g/l: einer 6%igen wässrig/alkoholischen Lösung eines Methylsilsesquioxans
- 150 g/l: einer Dispersion eines Perfluoralkylketten enthaltenden Acrylat-Copolymerisats mit einem F-Gehalt von ca. 40 % (bezogen auf Feststoff) und ca. 16 % Feststoff (bezogen auf die Gesamtdispersion) (®BAYGARD CA 40135, Bayer AG)
- 10 g/l: der im Beispiel 2 beschriebenen Dispersion

Von dieser Mischung werden auf einen Abschnitt von 20 x 30 cm des Teppiches 15 ml mittels einer Spritzpistole gleichmäßig aufgesprüht. Danach wird bei 80°C getrocknet und der Prüfling bei 130°C 4 Minuten lang einer Hitzebehandlung unterzogen. Die Trockenanschmutzung wird mittels eines Trommelanschmutztestes bewertet. Das so ausgerüstete Teppichmaterial weist gegenüber einem Vergleichsmuster, das mit der gleichen Menge einer Mischung ohne die im Beispiel 2 beschriebene Dispersion ausgerüstet wurde, eine wesentlich geringere Trockenanschmutzung auf.

### Anwendungsbeispiel 6 (Hochveredelung)

Ein Baumwollgewebe in Leinenbindung mit 250 g/m², gebleicht, wird mit folgenden Flotten imprägniert, auf eine Restfeuchte von 80 % abgequetscht, bei 110°C getrocknet und 5 Minuten bei 150°C kondensiert.

### 6.1 (erfindungsgemäß)

- 130 g/l: der in Beispiel 28 beschriebenen 25%igen wässrigen Dispersion eines blockierten Polyurethans
- 1 g/l: NaHCO₃

### 6.2 (Stand der Technik)

- 80 g/l: ca. 40%ige wässrige Dimethylolethylenharnstofflösung (DMEU)
- 13 g/l: MgCl₂ als Katalysator für den DMEU

Die Bewertung der einzelnen Eigenschaften erfolgt nach der in der Industrie üblichen Methoden.

| | Ausrüstungen | | |
|---|---|---|---|
| | Flotte 6.1 | Flotte 6.2 | ohne Ausrüstung |
| Trockenknitterwinkel (Kette+Schuß) | 130 | 137 | 80 |
| Naßknitterwinkel (Kette+Schuß) | 210 | 205 | 170 |
| Trockenreißfestigkeit (N) (Kette) | 926 | 770 | 930 |
| Weißgrad nach Berger | 47,5 | 47 | 49 |
| Freier Formaldehyd (nach AATCC) | 20 ppm | 260 ppm | 20 ppm |

## Patentansprüche

1. Blockierte Polyisocyanate mit einem mittleren Molekulargewicht von 800 bis 25000 und einem Gehalt an
- blockierten Isocyanatgruppen, berechnet als freies NCO und bezogen auf unblockiertes Polyisocyanat entsprechend einem NCO-Gehalt von 5 bis 20 Gew.-%,
- ionischen Gruppen von 1 bis 75 Milliäquivalenten (meq) pro 100 g blockiertem Polyisocyanat und
- Polyalkylenoxideinheiten von 3 bis 40 Gew.-%, bezogen auf blockiertes Polyisocyanat,
erhältlich durch Umsetzung
a) organischer Polyisocyanate,
b) NCO-reaktiver Verbindungen enthaltend (potentielle) ionische Gruppen,
c) Polyalkylenether,
d) NCO-Blockierungsmittel und gegebenenfalls
e) weiterer, von b), c) und d) verschiedener NCO-reaktiver Verbindungen, wobei entweder zunächst aus den Komponenten a), b), c) und gegebenenfalls d) eingebaute Polyalkylenoxideinheiten und ionische Gruppen enthaltendes Polyisocyanat hergestellt wird, dessen freie NCO-Gruppen anschließend blockiert werden, oder als Blockierungsmittel (im Sinne einer Verbindung, die die Merkmale der obigen Gruppen b) und d) in sich vereinigt) Alkalibisulfit verwendet wird.

2. Polyisocyanate nach Anspruch 1 mit einem mittleren Molekulargewicht von 800 bis 5000.

3. Polyisocyanate nach Anspruch 1 mit einem Gehalt an blockierten Isocyanatgruppen entsprechend einem NCO-Gehalt von 10 bis 20 Gew.-%.

4. Polyisocyanate nach Anspruch 1 mit einem Gehalt an ionischen Gruppen von 2 bis 25 meq pro 100 g blockiertem Polyisocyanat.

5. Polyisocyanate nach Anspruch 1, deren Polyalkylenoxideinheiten zu 50 bis 100 Gew.-% Ethylenoxideinheiten enthalten.

6. Polyisocyanate nach Anspruch 5, deren Polyalkylenoxideinheiten neben Ethylenoxideinheiten allenfalls Propylenoxideinheiten enthalten.

7. Verfahren zur Herstellung der Polyisocyanate nach Ansprüchen 1 - 6, wonach man entweder die Komponenten (a), (b), (c) und gegebenenfalls (e) bei Temperaturen von 50 bis 120°C zu einem Zwischenprodukt mit freien Isocyanatgruppen umsetzt und diese freien Isocyanatgruppen anschließend blockiert oder die Komponenten (a), (b), (c), (d) und gegebenenfalls (e) unter Verwendung von Alkalibisulfit als Komponente (d) bei Temperaturen von 50 bis 120°C zum Endprodukt umsetzt.

8. Verwendung der Polyisocyanate nach Ansprüchen 1 - 6 als Knitterfestmittel für die Ausrüstung von Textilien.

9. Verwendung der Polyisocyanate nach Ansprüchen 1 - 6 in Kombination mit fluorierten organischen Verbindungen als Hydrophobier-/Oleophobiermittel für die Ausrüstung von Textilien.

10. Verwendung nach Anspruch 9, wobei die fluorierten organischen Verbindungen frei von Hydroxylgruppen sind.

## Claims

1. Blocked polyisocyanates having an average molecular weight of 800 to 25000 and a content of
- blocked isocyanate groups calculated as free NCO and, relative to unblocked polyisocyanate, corresponding to an NCO content of 5 to 20 wt.%,
- 1 to 75 milli-equivalents (meq) of ionic groups per 100 g blocked polyisocyanate and
- 3 to 40 wt.% of polyalkylene oxide units relative to blocked polyisocyanate,
obtainable by reaction of
a) organic polyisocyanates,
b) (potential) ionic groups containing NCO-reactive compounds,
c) polyalkylene ethers
d) NCO-blocking agents and optionally
e) other NCO-reactive compounds different from b), c) and d), and either polyisocyanate containing polyalkylene oxide units and ionic groups incorporated from components a), b), c) and optionally d) is manufactured and its free NCO groups are then blocked, or alkali-metal bisulphite is used as the blocking agent (in the sense of a compound comprising the features of the aforementioned groups b) and d)).

2. Polyisocyanates according to claim 1 having an average molecular weight of 800 to 5000.

3. Polyisocyanates according to claim 1 having a content of blocked isocyanate groups corresponding to an NCO content of 10 to 20 wt.%.

4. Polyisocynates according to claim 1 having a content of ionic groups of 2 to 25 meq per 100 g blocked polyisocyanate.

5. Polyisocyanates according to claim 1 in which the polyalkylene oxide units contain 50 to 100 wt.% ethylene oxide units.

6. Polyisocyanates according to claim 5 in which the polyalkylene oxide units optionally contain propylene oxide units in addition to ethylene oxide units.

7. A method of preparing the polyisocyanates according to claims 1 - 6, in which either the components (a), (b), (c) and optionally (e) are reacted at temperatures of 50 to 120°C to form an intermediate containing free isocyanate groups which are then blocked or the components (a), (b), (c), (d) and optionally (e) are converted to the end product at temperatures of 50 to 120°C, using alkali-metal bisulphate as component (d).

8. Use of the polyisocyanates according to claims 1 - 6 as crease-resisting agents for finishing of textiles.

9. Use of the polyisocyanates according to claims 1 - 6 in combination with fluorinated organic compounds as water-repellent/oil-repellent agents for finishing of textiles.

10. Use according to claim 9, the fluorinated organic compounds being free from hydroxyl groups.

## Revendications

1. Polyisocyanates bloqués, ayant un poids moléculaire moyen de 800 à 25 000, et contenant :
- des groupes isocyanates bloqués, exprimé en NCO libre et rapporté au polyisocyanate non bloqué, en quantité correspondant à une teneur en NCO de 5 à 20 % en poids,
- des groupes ioniques en quantité de 1 à 75 milliéquivalents (méq) pour 100 g du polyisocyanate bloqué, et
- des motifs d'oxydes de polyalkylène en quantité de 3 à 40 % du poids du polyisocyanate bloqué,
et qu'on obtient en faisant réagir :
a) des polyisocyanates organiques,
b) des composés réactifs avec les groupes NCO et contenant des groupes bioniques (potentiels),
c) des éthers de polyalkylène,
d) des agents bloquants des groupes NCO et, le cas échéant,
e) des composés réactifs avec les groupes NCO, autres que ceux mentionnés ci-dessus sous b), c) et d),
soit en préparant d'abord à partir des composants a), b), c) et le cas échéant d), un polyisocyanate qui contient des motifs d'oxyde de polyalkylène et des groupes ioniques et dont les groupes NCO libres sont ensuite bloqués, soit en utilisant en tant qu'agent bloquant (au sens d'un composé qui combine en soi les caractéristiques des groupes b) et d) ci-dessus) un bisulfite alcalin.

2. Polyisocyanates selon la revendication 1, ayant un poids moléculaire moyen de 800 à 5000.

3. Polyisocyanates selon la revendication 1, contenant des groupes isocyanates bloqués en quantité correspondant à une teneur en NCO de 10 à 20 % en poids.

4. Polyisocyanates selon la revendication 1, contenant des groupes ioniques en quantité de 2 à 25 méq pour 100 g de polyisocyanate bloqué.

5. Polyisocyanates selon la revendication 1, dont les motifs d'oxyde de polyalkylène consistent pour 50 à 100 % en poids en motifs d'oxyde d'éthylène.

6. Polyisocyanates selon la revendication 5, dont les motifs d'oxyde de polyéthylène contiennent, en plus des motifs d'oxyde d'éthylène, des motifs d'oxyde de propylène.

7. Procédé de préparation des polyisocyanates selon les revendications 1 à 6, selon lequel ou bien on fait réagir les composés (a), (b), (c), et le cas échéant (e) à des températures de 50 à 120°C avec formation d'un produit intermédiaire à groupes isocyanates libres, dont les groupes isocyanates libres sont ensuite bloqués, ou bien on fait réagir les composés (a), (b), (c), (d) et le cas échéant (e), avec utilisation d'un bisulfite alcalin en tant que composant (d), à des températures de 50 à 120°C, pour formation du produit final.

8. Utilisation des polyisocyanates selon les revendications 1 à 6, en tant qu'agents antifroissage pour l'apprêtage des matières textiles.

9. Utilisation des polyisocyanates selon les revendications 1 à 6, en combinaison avec des composés organiques fluorés, en tant qu'agents hydrofugeants/oléofugents pour l'apprêtage des textiles.

10. Utilisation selon la revendication 9, dans laquelle les composés organiques fluorés sont exempts de groupes hydroxy.
